# EUROPEAN PATENT APPLICATION

(11) **EP 4 391 639 A1**
(43) Date of publication of application: **26.06.2024**
(21) Application number: 22872162.7
(22) Date of filing: 23.09.2022
(51) Int. Cl.: H04W 28/02

(54) **COMMUNICATION METHOD AND APPARATUS**

(30) Priority: 24.09.2021 CN 202111122322; 20.10.2021 CN 202111222777
(71) Applicant: Huawei Technologies Co., Ltd., Shenzhen, Guangdong 518129 (CN)
(72) Inventor: XU, Xiaoying, Shenzhen, Guangdong 518129 (CN); ZHOU, Guohua, Shenzhen, Guangdong 518129 (CN); WEI, Yuejun, Shenzhen, Guangdong 518129 (CN)
(74) Representative: Pfenning, Meinig & Partner mbB
(86) International application number: PCT/CN2022/121082
(87) International publication number: WO 2023/046118

(57) **Abstract**

This application relates to the field of communication technologies, and discloses a communication method and apparatus. The method includes: After determining that an uplink data packet of a first service is congested, an access network device sends first information to a first core network element, where the first information is used to request to adjust a sending rate of the uplink data packet of the first service; and then the first core network element triggers an application server to notify a terminal device to adjust the sending rate. In this way, the terminal device can be quickly notified to adjust the sending rate of the uplink data packet, to relieve congestion in time.

## Description

### CROSS-REFERENCE TO RELATED APPLICATIONS

This application claims priority to Chinese Patent Application No. 202111122322.X, filed with the China National Intellectual Property Administration on September 24, 2021 and entitled "COMMUNICATION METHOD AND APPARATUS", and claims priority to Chinese Patent Application No. 202111222777.9, filed with the China National Intellectual Property Administration on October 20, 2021 and entitled "COMMUNICATION METHOD AND APPARATUS", both of which are incorporated herein by reference in their entireties.

### TECHNICAL FIELD

This application relates to the field of communication technologies, and in particular, to a communication method and apparatus.

### BACKGROUND

With continuous development of a 5th generation (5th generation, 5G) communication system, a data transmission delay is continuously reduced, and a transmission capacity is increasingly large. Some services that have high real-time performance and high reliability requirements, such as an extended reality (extended reality, XR) service, are gradually penetrated into the 5G communication system. The XR service may include an augmented reality (augmented reality, AR) service and a virtual reality (virtual reality, VR) service. A VR technology is mainly to render visual and audio scenarios to simulate, as much as possible, a sense stimulation that is of visual and audio in a real world and that is to a user. The VR technology usually requires the user to wear a head-mounted display (head mounted device, HMD) to completely replace a visual field of the user with an analog visual component, and requires the user to wear a headset to provide accompanying audio for the user. An AR technology is a technology that calculates a location and an angle of a camera image in real time and adds a corresponding image, and is a new technology that "seamlessly" integrates real-world information and virtual-world information. An objective of this technology is to integrate a virtual world into the real world on a screen and perform interaction.

However, for these services that have the high real-time performance and the high reliability requirements, how to relieve congestion when a data packet is congested still needs to be further studied.

### SUMMARY

This application provides a communication method and apparatus, to quickly notify a sender to adjust a sending rate of a data packet, to relieve congestion in time.

According to a first aspect, an embodiment of this application provides a communication method. The method may be applied to an access network device or a chip disposed in the access network device. That the method is applied to the access network device is used as an example. In the method, the access network device generates first information, where the first information includes an identifier of a first QoS flow and transmission direction information, the first QoS flow is used to transmit a data packet of a first service, and the first information is used to request to adjust a sending rate of a data packet of the first service in a transmission direction indicated by the transmission direction information; and sends the first information to a first core network element.

In the foregoing method, for downlink transmission, the access network device may send the first information to the first core network element, and then the first core network element requests or notifies an application server to adjust the sending rate. In comparison with a manner in which the access network device first sends an ECN=11 to a terminal device, and then the terminal device sends an ECE=1 to the application server, an information transmission path is short, and when sending the first information, the access network device may not need to consider whether a downlink data packet with an ECN=10 or an ECN=01 is received. In this way, the application server can be quickly notified to adjust the sending rate of the downlink data packet, to relieve congestion in time. For uplink transmission, the access network device may send the first information to the first core network element, and then the first core network element triggers an application server to notify a terminal device to adjust the sending rate. In comparison with a manner in which the access network device first sends an ECN=11 to the application server, and then the application server sends an ECE=1 to the terminal device, when sending the first information, the access network device may not need to consider whether an uplink data packet with an ECN=10 or an ECN=01 is received. In this way, the terminal device can be quickly notified to adjust the sending rate of the uplink data packet, to relieve congestion in time.

The foregoing transmission direction information may indicate the uplink transmission or the downlink transmission. When the transmission direction information indicates the uplink transmission, the transmission direction information may be understood as an uplink transmission indication. When the transmission direction information indicates the downlink transmission, the transmission direction information may be understood as a downlink transmission indication. The following content is described by using an example in which the transmission direction information indicates the uplink transmission.

In a possible design, the first information further includes second information, and the second information indicates a sending rate recommended by the access network device. In this way, a sender may adjust an actual sending rate based on the sending rate recommended by the access network device, to adjust the sending rate to a proper value to more quickly and effectively relieve congestion.

In a possible design, the second information includes at least one of the following: the sending rate recommended by the access network device, an index value of the sending rate recommended by the access network device, a frame rate that is of the first service and that is recommended by the access network device, a maximum data burst volume that is of the first service and that is recommended by the access network device, and an image resolution that is of the first service and that is recommended by the access network device.

In a possible design, the method further includes: determining that the uplink data packet of the first service is congested; or determining that a transmission delay that is of the uplink data packet of the first service and that is between the access network device and the terminal device is greater than or equal to a preset transmission delay.

In a possible design, the sending the first information to a first core network element includes: sending a first data packet to the first core network element, where the first information is carried in a GTP-U header of the first data packet.

In a possible design, the method further includes: receiving a second data packet from the terminal device; and encapsulating the second data packet according to a GTP-U protocol to obtain the first data packet.

In a possible design, the method further includes: receiving enabling information from a second core network element, where the enabling information is used to enable the access network device to request to adjust the sending rate of the uplink data packet of the first service.

In a possible design, the enabling information is carried in a PDU session resource establishment request message, and the PDU session resource establishment request message is used to request to establish the first QoS flow; or the enabling information is carried in a PDU session resource modification request message, and the PDU session resource modification request message is used to request to modify the first QoS flow.

In a possible design, the method further includes: receiving third information, where the third information indicates an adjusted sending rate of the uplink data packet of the first service.

According to a second aspect, an embodiment of this application provides a communication method. The method may be applied to a DU or a chip disposed in the DU. That the method is applied to the DU is used as an example. In the method, the DU generates information a, where the information a includes an uplink transmission indication, and the information a is used to request to adjust a sending rate of an uplink data packet of a first service; and sends the information a to a CU or a CU-UP through a first tunnel, where the first tunnel corresponds to a first DRB, the first DRB corresponds to a first QoS flow, and the first QoS flow is used to transmit a data packet of the first service.

In a possible design, the method further includes: receiving enabling information from the CU or a CU-CP, where the enabling information is used to enable the DU to request to adjust the sending rate of the uplink data packet of the first service.

In a possible design, the enabling information is carried in a user context setup request message.

According to a third aspect, an embodiment of this application provides a communication method. The method may be applied to a CU or a chip disposed in the CU. That the method is applied to the CU is used as an example. In the method, the CU receives information a from a DU through a first tunnel, where the first tunnel corresponds to a first DRB, the first DRB corresponds to a first QoS flow, the first QoS flow is used to transmit a data packet of a first service, and the information a includes an uplink transmission indication; and sends first information to a first core network element, where the first information includes the uplink transmission indication and an identifier of the first QoS flow, and the first information is used to request to adjust a sending rate of an uplink data packet of the first service.

In a possible design, the method further includes: receiving enabling information from a second core network element, where the enabling information is used to enable the DU to request to adjust the sending rate of the uplink data packet of the first service; and sending the enabling information to the DU.

In a possible design, the enabling information is carried in a user context setup request message.

According to a fourth aspect, an embodiment of this application provides a communication method. The method may be applied to an access network device or a chip disposed in the access network device. That the method is applied to the access network device is used as an example. In the method, the access network device generates an access stratum control message, where the access stratum control message indicates that a downlink data packet of a first service is congested; and sends the access stratum control message to a terminal device. In this manner, because the access stratum control message is transmitted quickly, the terminal device can be quickly notified to adjust a sending rate of an uplink data packet, or the terminal device can be quickly notified to notify an application server of the congestion.

In a possible design, the method further includes: sending fifth information to the terminal device, where the fifth information is used to enable the terminal device to process the access stratum control message. In this way, the access network device can flexibly control the terminal device.

In a possible design, the fifth information is carried in an RRC reconfiguration message.

According to a fifth aspect, an embodiment of this application provides a communication method. The method may be applied to a terminal device or a chip disposed in the terminal device. That the method is applied to the terminal device is used as an example. In the method, the terminal device receives an access stratum control message from an access network device, where the access stratum control message indicates that a data packet of a first service is congested; and notifies an application server of the congestion based on the access stratum control message.

In a possible design, the method further includes: receiving fifth information, where the fifth information is used to enable the terminal device to process the access stratum control message.

In a possible design, the fifth information is carried in an RRC reconfiguration message.

It should be noted that the method described in the fifth aspect corresponds to the method described in the fourth aspect. For beneficial effects of related technical features in the method described in the fifth aspect, refer to the descriptions in the fourth aspect. Details are not described again.

For the access stratum control message in the fourth aspect or the fifth aspect, in a possible design, the access stratum control message includes fourth information, where the fourth information indicates that a downlink data packet of the first service is congested.

In a possible design, the access stratum control message is a MAC layer control message.

In a possible design, the MAC layer control message includes a MAC CE, and the MAC CE includes the fourth information.

In a possible design, the fourth information includes a logical channel identifier to which a first QoS flow is mapped, where the first QoS flow is used to transmit the data packet of the first service.

In a possible design, the MAC layer control message includes a MAC subheader, and the MAC subheader includes a predefined logical channel identifier.

In a possible design, the access stratum control message is a PDCP layer control message.

In a possible design, the PDCP layer control message includes a PDCP header, and the PDCP header includes a predefined PDU type.

According to a sixth aspect, an embodiment of this application provides a communication method. The method may be applied to an access network device or a chip disposed in the access network device. That the method is applied to the access network device is used as an example. In the method, the access network device generates seventh information, where the seventh information indicates that an uplink/downlink data packet of a first service is congested; and sends the seventh information to a first core network element. The first core network element may be a UPF network element.

In this way, for uplink transmission, the access network device may send the seventh information to the UPF network element, and then the UPF network element modifies an ECN field in an IP header of the downlink data packet to an ECN=11, and sends the downlink data packet to a terminal device. For downlink transmission, the access network device may send the seventh information to the UPF network element, and then the UPF network element modifies an ECN field in an IP header of the uplink data packet to an ECN=11, and sends the uplink data packet to an application server. In this way, the access network device does not need to modify the ECN in the IP header of the uplink/downlink data packet while the congestion can be relieved, thereby improving data packet transmission security.

In a possible design, the sending the seventh information to a first core network element includes: sending a first data packet to the first core network element, where the first information is carried in a GTP-U header of the first data packet.

In a possible design, the method further includes: receiving a second data packet from the terminal device; and encapsulating the second data packet according to a GTP-U protocol to obtain the first data packet.

In a possible design, the method further includes: receiving enabling information from a second core network element, where the enabling information is used to enable the access network device to indicate, (to the first core network element), that the uplink/downlink data packet of the first service is congested.

In a possible design, the enabling information is carried in a PDU session resource establishment request message, and the PDU session resource establishment request message is used to request to establish a first QoS flow; or the enabling information is carried in a PDU session resource modification request message, and the PDU session resource modification request message is used to request to modify a first QoS flow.

According to a seventh aspect, an embodiment of this application provides a communication method. The method may be applied to a first core network element (for example, a UPF network element) or a chip disposed in the first core network element. That the method is applied to the first core network element is used as an example. In the method, the first core network element receives seventh information from an access network device, where the seventh information indicates that an uplink/downlink data packet of a first service is congested. When the seventh information indicates that the uplink data packet of the first service is congested, the first core network element sends a third data packet of the first service to an application server, where an IP header of the third data packet carries marking for congestion, and the marking for congestion may be an ECN=11. Alternatively, when the seventh information indicates that the downlink data packet of the first service is congested, the first core network element sends a fourth data packet of the first service to a terminal device, where an IP header of the fourth data packet carries marking for congestion.

According to an eighth aspect, an embodiment of this application provides a communication method. The method may be applied to a DU or a chip disposed in the DU. That the method is applied to the DU is used as an example. In the method, the DU generates information b, where the information b indicates that an uplink/downlink data packet of a first service is congested; and sends the information b to a CU or a CU-UP through a first tunnel, where the first tunnel corresponds to a first DRB, the first DRB corresponds to a first QoS flow, and the first QoS flow is used to transmit a data packet of the first service.

In a possible design, the method further includes: receiving enabling information from the CU or a CU-CP, where the enabling information is used to enable the DU to indicate that the uplink/downlink data packet of the first service is congested.

In a possible design, the enabling information is carried in a user context setup request message.

According to a ninth aspect, an embodiment of this application provides a communication method. The method may be applied to a CU or a chip disposed in the CU. That the method is applied to the CU is used as an example. In the method, the CU receives information b from a DU through a first tunnel, where the first tunnel corresponds to a first DRB, the first DRB corresponds to a first QoS flow, the first QoS flow is used to transmit a data packet of a first service, and the information b indicates that an uplink/downlink data packet of the first service is congested; and sends seventh information to a first core network element, where the seventh information indicates that the uplink/downlink data packet of the first service is congested.

In a possible design, the method further includes: receiving enabling information from a second core network element, where the enabling information is used to enable the DU to indicate that the uplink/downlink data packet of the first service is congested; and sending the enabling information to the DU.

In a possible design, the enabling information is carried in a user context setup request message.

It should be noted that the methods described in the seventh aspect to the ninth aspect correspond to the method described in the sixth aspect. For beneficial effects of related technical features, refer to the descriptions in the sixth aspect. Details are not described again.

According to a tenth aspect, this application provides a communication apparatus. The communication apparatus may be an access network device or a chip disposed in the access network device. The communication apparatus has a function of implementing the first aspect, the second aspect, the third aspect, the fourth aspect, the sixth aspect, the eighth aspect, or the ninth aspect. For example, the communication apparatus includes a corresponding module, unit, or means (means) that performs an operation in the first aspect, the second aspect, the third aspect, the fourth aspect, the sixth aspect, the eighth aspect, or the ninth aspect. The module, unit, or means may be implemented by software, may be implemented by hardware, or may be implemented by hardware by executing corresponding software.

In a possible design, the communication apparatus includes a processing unit and a communication unit. The communication unit may be configured to receive and send a signal, to implement communication between the communication apparatus and another apparatus. For example, the communication unit is configured to receive configuration information from a terminal device. The processing unit may be configured to perform some internal operations of the communication apparatus. Functions performed by the processing unit and the communication unit may correspond to the operations in the first aspect, the second aspect, the third aspect, the fourth aspect, the sixth aspect, the eighth aspect, or the ninth aspect.

In a possible design, the communication apparatus includes a processor, and the processor may be configured to be coupled to a memory. The memory may store a necessary computer program or instructions for implementing the functions in the first aspect, the second aspect, the third aspect, the fourth aspect, the sixth aspect, the eighth aspect, or the ninth aspect. The processor may execute the computer program or the instructions stored in the memory. When the computer program or the instructions are executed, the communication apparatus is enabled to implement the method in any possible design or implementation of the first aspect, the second aspect, the third aspect, the fourth aspect, the sixth aspect, the eighth aspect, or the ninth aspect.

In a possible design, the communication apparatus includes a processor and a memory. The memory may store a necessary computer program or instructions for implementing the functions in the first aspect, the second aspect, the third aspect, the fourth aspect, the sixth aspect, the eighth aspect, or the ninth aspect. The processor may execute the computer program or the instructions stored in the memory. When the computer program or the instructions are executed, the communication apparatus is enabled to implement the method in any possible design or implementation of the first aspect, the second aspect, the third aspect, the fourth aspect, the sixth aspect, the eighth aspect, or the ninth aspect.

In a possible design, the communication apparatus includes a processor and an interface circuit. The processor is configured to: communicate with another apparatus by using the interface circuit, and perform the method in any possible design or implementation of the first aspect, the second aspect, the third aspect, the fourth aspect, the sixth aspect, the eighth aspect, or the ninth aspect.

According to an eleventh aspect, this application provides a communication apparatus. The communication apparatus may be a terminal device or a chip disposed in the terminal device. The communication apparatus has a function of implementing the fifth aspect. For example, the communication apparatus includes a corresponding module, unit, or means that performs an operation in the fifth aspect. The function, unit, or means may be implemented by software, may be implemented by hardware, or may be implemented by hardware by executing corresponding software.

In a possible design, the communication apparatus includes a processing unit and a communication unit. The communication unit may be configured to receive and send a signal, to implement communication between the communication apparatus and another apparatus. For example, the communication unit is configured to send system information to a terminal device. The processing unit may be configured to perform some internal operations of the communication apparatus. Functions performed by the processing unit and the communication unit may correspond to the operations in the fifth aspect.

In a possible design, the communication apparatus includes a processor, and the processor may be configured to be coupled to a memory. The memory may store a necessary computer program or instructions for implementing the functions in the fifth aspect. The processor may execute the computer program or the instructions stored in the memory. When the computer program or the instructions are executed, the communication apparatus is enabled to implement the method in any possible design or implementation of the fifth aspect.

In a possible design, the communication apparatus includes a processor and a memory. The memory may store a necessary computer program or instructions for implementing the functions in the fifth aspect. The processor may execute the computer program or the instructions stored in the memory. When the computer program or the instructions are executed, the communication apparatus is enabled to implement the method in any possible design or implementation of the fifth aspect.

In a possible design, the communication apparatus includes a processor and an interface circuit. The processor is configured to: communicate with another apparatus by using the interface circuit, and perform the method in any possible design or implementation of the fifth aspect.

According to a twelfth aspect, this application provides a communication apparatus. The communication apparatus may be a first core network element or a chip disposed in the first core network element. The communication apparatus has a function of implementing the seventh aspect. For example, the communication apparatus includes a corresponding module, unit, or means that performs an operation in the seventh aspect. The function, unit, or means may be implemented by software, may be implemented by hardware, or may be implemented by hardware by executing corresponding software.

In a possible design, the communication apparatus includes a processing unit and a communication unit. The communication unit may be configured to receive and send a signal, to implement communication between the communication apparatus and another apparatus. For example, the communication unit is configured to send system information to a terminal device. The processing unit may be configured to perform some internal operations of the communication apparatus. Functions performed by the processing unit and the communication unit may correspond to the operations in the seventh aspect.

In a possible design, the communication apparatus includes a processor, and the processor may be configured to be coupled to a memory. The memory may store a necessary computer program or instructions for implementing the functions in the seventh aspect. The processor may execute the computer program or the instructions stored in the memory. When the computer program or the instructions are executed, the communication apparatus is enabled to implement the method in any possible design or implementation of the seventh aspect.

In a possible design, the communication apparatus includes a processor and a memory. The memory may store a necessary computer program or instructions for implementing the functions in the seventh aspect. The processor may execute the computer program or the instructions stored in the memory. When the computer program or the instructions are executed, the communication apparatus is enabled to implement the method in any possible design or implementation of the seventh aspect.

In a possible design, the communication apparatus includes a processor and an interface circuit. The processor is configured to: communicate with another apparatus by using the interface circuit, and perform the method in any possible design or implementation of the seventh aspect.

It may be understood that, in the tenth aspect to the twelfth aspect, the processor may be implemented by the hardware, or may be implemented by the software. When the processor is implemented by the hardware, the processor may be a logic circuit, an integrated circuit, or the like. When the processor is implemented by the software, the processor may be a general-purpose processor, and is implemented by reading software code stored in the memory. In addition, there may be one or more processors, and there may be one or more memories. The memory may be integrated with the processor, or the memory and the processor are separately disposed. In a specific implementation process, the memory and the processor may be integrated into a same chip, or may be separately disposed on different chips. A type of the memory and a manner of disposing the memory and the processor are not limited in embodiments of this application.

According to a thirteenth aspect, this application provides a computer-readable storage medium. The computer storage medium stores computer-readable instructions. When a computer reads and executes the computer-readable instructions, the computer is enabled to perform the method in any possible design of the first aspect to the ninth aspect.

According to a fourteenth aspect, this application provides a computer program product. When a computer reads and executes the computer program product, the computer is enabled to perform the method in any possible design of the first aspect to the ninth aspect.

According to a fifteenth aspect, this application provides a chip. The chip includes a processor. The processor is coupled to a memory, and is configured to read and execute a software program stored in the memory, to implement the method in any possible design of the first aspect to the ninth aspect.

These aspects or other aspects of this application are more concise and comprehensible in descriptions of the following embodiments.

### BRIEF DESCRIPTION OF DRAWINGS

FIG. 1 is a schematic diagram of a communication system to which an embodiment of this application is applicable;
FIG. 2a is a diagram of an example of a protocol layer structure between a terminal device and a network device according to an embodiment of this application;
FIG. 2b is a schematic diagram of a CU-DU split architecture according to an embodiment of this application;
FIG. 2c is a schematic diagram of another CU-DU split architecture according to an embodiment of this application;
FIG. 3 is a schematic diagram of an IP header structure and a TCP header structure according to an embodiment of this application;
FIG. 4 is a schematic flowchart corresponding to a communication method according to Embodiment 1 of this application;
FIG. 5 is a schematic flowchart corresponding to a communication method according to Embodiment 2 of this application;
FIG. 6 is a schematic flowchart corresponding to a communication method according to Embodiment 3 of this application;
FIG. 7 is a schematic flowchart corresponding to a communication method according to Embodiment 4 of this application;
FIG. 8 is a schematic flowchart corresponding to a communication method according to Embodiment 5 of this application;
FIG. 9 is a block diagram of a possible example of an apparatus according to an embodiment of this application;
FIG. 10 is a schematic diagram of a structure of an access network device according to an embodiment of this application; and
FIG. 11 is a schematic diagram of a structure of a terminal device according to an embodiment of this application.

### DESCRIPTION OF EMBODIMENTS

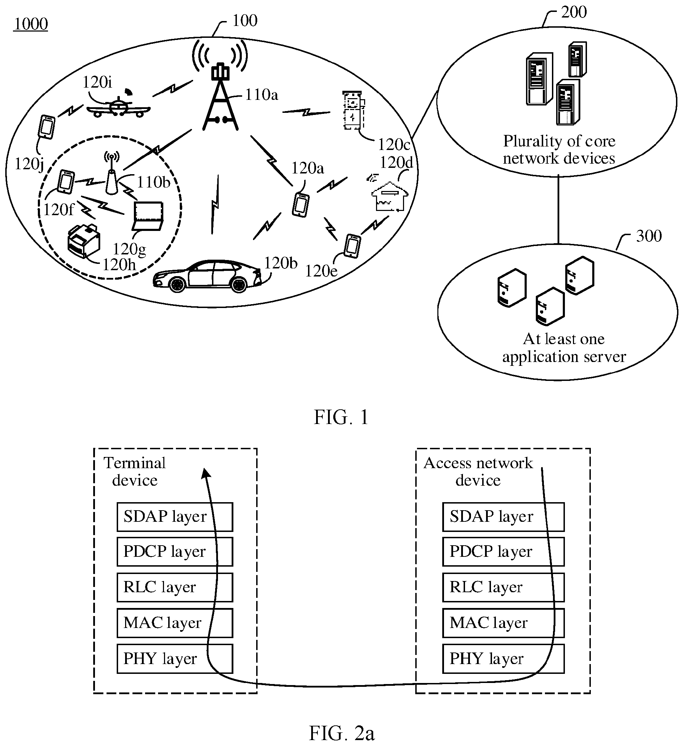

FIG. 1 is a schematic diagram of an architecture of a communication system to which an embodiment of this application is applicable. As shown in FIG. 1, the communication system 1000 includes a radio access network (radio access network, RAN) 100 and a core network (core network, CN) 200. Optionally, the communication system 1000 may further include a data network (data network, DN) 300.

The following separately describes in detail the RAN 100, the CN 200, and the DN 300 in FIG. 1.

### 1. RAN 100

The RAN 100 may include at least one radio access network device (which may also be referred to as an access network device, for example, 110a and 110b in FIG. 1), and may further include at least one terminal device (for example, 120a to 120j in FIG. 1). The terminal device may be connected to the radio access network device in a wireless manner. A wired or wireless manner may be used for connection between terminal devices and between access network devices.

### (1) Terminal device and access network device

The terminal device may also be referred to as a terminal, user equipment (user equipment, UE), a mobile station, a mobile terminal, or the like. The terminal device may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IOT) scenario, a virtual reality scenario, an augmented reality scenario, an industrial control scenario, a self-driving scenario, a telemedicine scenario, a smart grid scenario, a smart furniture scenario, a smart office scenario, a smart wearable scenario, a smart transportation scenario, and a smart city scenario. The terminal device may be a mobile phone, a tablet computer, a computer with a wireless transceiver function, a wearable device, a vehicle, an unmanned aerial vehicle, a helicopter, an airplane, a ship, a robot, a robot arm, a smart home device, or the like. A specific technology and a specific device form that are used by the terminal device are not limited in embodiments of this application.

The access network device may be a base station (base station), an evolved NodeB (evolved NodeB, eNodeB), a transmission reception point (transmission reception point, TRP), a next generation NodeB (next generation NodeB, gNB) in a 5G communication system, a next generation NodeB in a 6th generation (6th generation, 6G) communication system, a base station in a future communication system, an access node in a Wi-Fi system, or the like; or may be a module or a unit that completes a function of a base station. The access network device may be a macro base station (for example, 110a in FIG. 1), may be a micro base station or an indoor base station (for example, 110b in FIG. 1), or may be a relay node, a donor node, or the like. A specific technology and a specific device form that are used by the access network device are not limited in embodiments of this application.

It should be noted that the access network device and the terminal device may be at fixed locations, or may be mobile. The access network device and the terminal device may be deployed on a land, including an indoor device, an outdoor device, a handheld device, or a vehicle-mounted device; may be deployed on water; or may be deployed on an airplane, a balloon, and an artificial satellite in the air. Application scenarios of the access network device and the terminal device are not limited in embodiments of this application. In addition, roles of the access network device and the terminal device may be relative. For example, a helicopter or an unmanned aerial vehicle 120i in FIG. 1 may be configured as a mobile access network device. For those terminal devices 120j that access the radio access network 100 by using 120i, 120i is an access network device. However, for the access network device 110a, 120i is a terminal device. In other words, 110a and 120i communicate with each other by using a radio air interface protocol. Certainly, 110a and 120i may alternatively communicate with each other by using an interface protocol between the access network devices. In this case, for 110a, 120i is also an access network device. Therefore, both the access network device and the terminal device may be collectively referred to as a communication apparatus. 110a and 110b in FIG. 1 may be referred to as communication apparatuses having a function of the access network device, and 120a to 120j in FIG. 1 may be referred to as communication apparatuses having a function of the terminal device.

In embodiments of this application, the function of the access network device may alternatively be performed by a module (for example, a chip) in the access network device, or may be performed by a control subsystem including the function of the access network device. The control subsystem including the function of the access network device may be a control center in the foregoing application scenarios such as the smart grid scenario, the industrial control scenario, the smart transportation scenario, and the smart city scenario. The function of the terminal may alternatively be performed by a module (for example, a chip or a modem) in the terminal, or may be performed by an apparatus including the function of the terminal.

### (2) Protocol layer structure

Communication between the access network device and the terminal device complies with a specific protocol layer structure. For example, a control plane protocol layer structure may include a radio resource control (radio resource control, RRC) layer, a packet data convergence protocol (packet data convergence protocol, PDCP) layer, a radio link control (radio link control, RLC) layer, a media access control (media access control, MAC) layer, and a physical layer (physical layer, PHY). A user plane protocol layer structure may include a PDCP layer, an RLC layer, a MAC layer, and a physical layer. In a possible implementation, a service data adaptation protocol (service data adaptation protocol, SDAP) layer may be further included above the PDCP layer. The SDAP layer, the PDCP layer, the RLC layer, the MAC layer, and the physical layer may also be collectively referred to as an access stratum. For specific descriptions of the foregoing protocol layers, refer to related technical specifications of the 3rd generation partnership project (3rd generation partnership project, 3GPP).

Data transmission between the access network device and the terminal device is used as an example. The data transmission needs to pass through a user plane protocol layer, for example, pass through the SDAP layer, the PDCP layer, the RLC layer, the MAC layer, and the physical layer. For example, at least one data radio bearer (data radio bearer, DRB) is established between the access network device and the terminal device for data transmission. Each DRB may correspond to a group of functional entity sets, for example, include one PDCP layer entity, at least one RLC layer entity corresponding to the PDCP layer entity, at least one MAC layer entity corresponding to the at least one RLC layer entity, and at least one physical layer entity corresponding to the at least one MAC layer entity. It should be noted that at least one signaling radio bearer (signaling radio bearer, SRB) may also be established between the access network device and the terminal device for signaling transmission. The DRB and the SRB may be collectively referred to as a radio bearer (radio bearer, RB).

Downlink data transmission is used as an example. FIG. 2a is a schematic diagram of downlink data transmission between layers. After obtaining data from an upper layer, an SDAP layer entity may map the data to a PDCP layer entity of a corresponding DRB based on a quality of service (quality of service, QoS) flow identifier (QoS flow indicator, QFI) of the data. The PDCP layer entity may transmit the data to at least one RLC layer entity corresponding to the PDCP layer entity, and then the at least one RLC layer entity transmits the data to a corresponding MAC layer entity. Then, the MAC layer entity generates a transport block, and a corresponding physical layer entity wirelessly transmits the transport block. The data is correspondingly encapsulated at each layer. Data received by a layer from an upper layer of the layer is considered as a service data unit (service data unit, SDU) of the layer. After being encapsulated at the layer, the data becomes a protocol data unit (protocol data unit, PDU), and is then transferred to a next layer. For example, data received by the PDCP layer entity from an upper layer is referred to as a PDCP SDU, and data sent by the PDCP layer entity to a lower layer is referred to as a PDCP PDU. Data received by the RLC layer entity from an upper layer is referred to as an RLC SDU, and data sent by the RLC layer entity to a lower layer is referred to as an RLC PDU. Data may be transmitted between different layers through a corresponding channel. For example, data may be transmitted between the RLC layer entity and the MAC layer entity through a logical channel (logical channel, LCH), and data may be transmitted between the MAC layer entity and the physical layer entity through a transport channel (transport channel).

For example, a terminal device further has an application layer and a non-access stratum. The application layer may be used to provide a service for an application program installed in the terminal device. The non-access stratum may be used to forward user data, for example, forward uplink data received from the application layer to an SDAP layer, or forward downlink data received from an SDAP layer to the application layer.

### (3) CU-DU split architecture

In the 5G communication system, the access network device may include one or more central units (central units, CUs) and one or more distributed units (distributed units, DUs). A plurality of DUs may be controlled by one CU in a centralized manner. This architecture may be referred to as the CU-DU split architecture. For example, an interface between the CU and the DU may be referred to as an F1 interface. A control plane (control plane, CP) interface may be an F1-C interface, and a user plane (user plane, UP) interface may be an F 1-U interface.

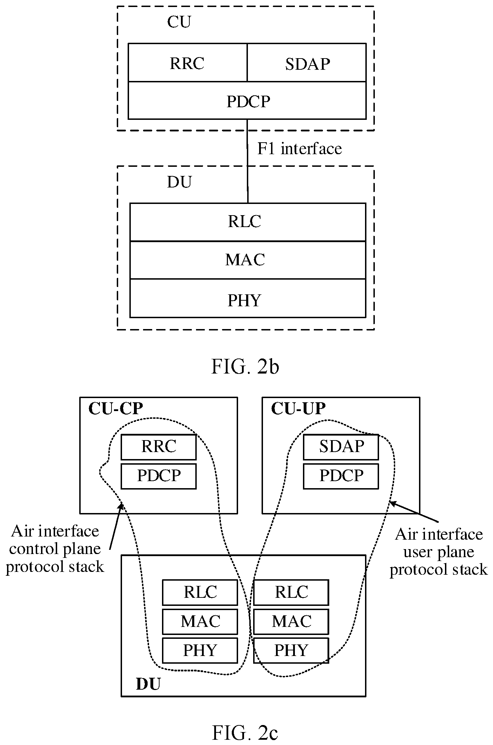

Division may be performed for processing functions of the CU and the DU based on protocol layers of a wireless network. For example, as shown in FIG. 2b, functions of a PDCP layer and protocol layers above the PDCP layer are set on the CU, and functions of protocol layers (for example, an RLC layer and a MAC layer) below the PDCP layer are set on the DU. It may be understood that, division of the processing functions of the CU and the DU based on the protocol layers is merely an example, and the processing functions may alternatively be divided in another manner. For example, functions of protocol layers above the RLC layer are set on the CU, and functions of the RLC layer and protocol layers below the RLC layer are set on the DU. For another example, functions of more protocol layers may be divided for the CU or the DU. For still another example, some processing functions of the protocol layers may be divided for the CU or the DU. This is not limited in embodiments of this application.

Further, the function of the CU may be implemented by one entity or may be implemented by different entities. For example, the function of the CU may be further divided. To be specific, a control plane and a user plane are split, and are implemented by using different entities: a control plane CU entity (namely, a CU-CP entity) and a user plane CU entity (namely, a CU-UP entity). The CU-CP entity and the CU-UP entity may be coupled to the DU, to jointly complete a function of a RAN device. An interface between the CU-CP entity and the CU-UP entity may be an E1 interface, an interface between the CU-CP entity and the DU may be an F1-C interface, and an interface between the CU-UP entity and the DU may be an F1-U interface. One DU and one CU-UP may be connected to one CU-CP. Under control of a same CU-CP, one DU may be connected to a plurality of CU-UPs, and one CU-UP may be connected to a plurality of DUs. FIG. 2c is a schematic diagram of distribution of air interface protocol stacks. As shown in FIG. 2c, for both a user plane and a control plane, the air interface protocol stack may be that an RLC layer, a MAC layer, and a PHY layer are on a DU, and a PDCP layer and protocol layers above the PDCP layer are on a CU.

It should be noted that in the architectures shown in FIG. 2b and FIG. 2c, signaling generated by the CU may be sent to a terminal device through the DU, or signaling generated by a terminal device may be sent to the CU through the DU. The DU may transparently transmit the signaling to the terminal device or the CU by directly encapsulating the signaling at a protocol layer without parsing the signaling. In the following embodiments, if transmission of such signaling between the DU and the terminal device is described, sending or receiving of the signaling by the DU includes this scenario. For example, signaling at the RRC layer or the PDCP layer is finally processed as data at the physical layer and sent to the terminal device, or is converted from received data at the physical layer. In this architecture, it may also be considered that the signaling at the RRC layer or the PDCP layer is sent by the DU, or sent by the DU and a radio frequency apparatus.

### 2. CN

The CN 200 may include a plurality of core network elements, and the radio access network device may be connected to the core network element in a wireless or wired manner. The core network element and the radio access network device may be independent and different physical devices, a function of the core network element and a logical function of the radio access network device may be integrated into a same physical device, or some functions of the core network element and some functions of the radio access network device may be integrated into one physical device.

The 5G communication system is used as an example. The core network element in the CN 200 may include a session management function (session management function, SMF) network element, a user plane function (user plane function, UPF) network element, a policy control function (policy control function, PCF) network element, an application function (application function, AF) network element, and the like.

The SMF network element is a control plane network element provided by an operator network and is responsible for managing a PDU session of the terminal device. The PDU session is a channel used to transmit a PDU, and the PDU needs to be transmitted between the terminal device and the DN through the PDU session.

The UPF network element is a gateway provided by an operator, and is a gateway for communication between the operator network and the DN. The UPF network element includes user plane-related functions such as data packet routing and transmission, packet inspection, QoS handling, lawful interception, uplink packet inspection, and downlink data packet storage.

The PCF network element is a control plane function provided by the operator, and is configured to provide a policy of the PDU session for the SMF network element. The policy may include a charging-related policy, a QoS-related policy, an authorization-related policy, and the like.

The AF network element is a function network element that provides various business services and can interact with the core network through another network element and interact with a policy management framework to perform policy management.

In addition, the CN 200 may further include other possible network elements, for example, a network exposure function (network exposure function, NEF) network element and a unified data repository (unified data repository, UDR) network element. This is not specifically limited. In embodiments of this application, the function of the core network element may be performed by a module (for example, a chip or a modem) in the core network element, or may be performed by an apparatus including the function of the core network element.

### 4. DN 300

The DN 300 may also be referred to as a packet data network (packet data network, PDN), and is a network located outside the operator network. Application servers corresponding to a plurality of services may be deployed in the DN 300, to provide a plurality of possible services for the terminal device. An application layer corresponding to an application layer of the terminal device may be disposed in the application server.

It may be understood that the solutions in embodiments of this application are applicable to a plurality of possible communication systems, for example, the 5G communication system or the future 6G communication system. The foregoing network elements or the functions may be network elements in a hardware device, may be software functions run on dedicated hardware, or may be virtualization functions instantiated on a platform (for example, a cloud platform). In addition, FIG. 1 is merely a schematic diagram. The communication system may further include other network devices, for example, may further include a wireless relay device and a wireless backhaul device.

In the communication system shown in FIG. 1, a transport layer connection may be established between the terminal device and the application server, and a data packet of a service (for example, a first service) is transmitted through the transport layer connection. The transport layer connection may be a transmission control protocol (transmission control protocol, TCP) connection. The transport layer connection may include a plurality of network devices, configured to forward a data packet sent by a sender. The plurality of network devices may include an access network device, a UPF network element, and the like.

For example, the terminal device may send the data packet of the first service to the application server through the foregoing transport layer connection. To be specific, the terminal device sends the data packet of the first service to the application server through the access network device and the UPF network element. In this case, the terminal device is a sender, the application server is a receiver, a transmission direction is uplink transmission, and the transmitted data packet is an uplink data packet. For another example, the application server may send the data packet of the first service to the terminal device through the foregoing transport layer connection. To be specific, the application server sends the data packet of the first service to the terminal device through the UPF network element and the access network device. In this case, the application server is a sender, the terminal device is a receiver, a transmission direction is downlink transmission, and the transmitted data packet is a downlink data packet.

When the data packet of the first service is transmitted between the terminal device and the access network device, the data packet of the first service may be congested due to factors such as a radio resource limitation and instability of a radio channel. After the congestion occurs, if a sender of the first service continues to send a large quantity of data packets, a data packet transmission delay may be increased, a data packet may be lost, or the like. If the first service is a service (for example, a VR service or an AR service) that has high real-time performance and a high reliability requirement, the increase in the data packet transmission delay or the data packet loss caused by the congestion severely affects user experience. For example, the VR service is used as an example. When a user watches a video displayed on an HMD, if congestion causes an increase in a data packet transmission delay or a data packet loss, phenomena such as frame freezing and incomplete image may occur in the video watched by the user, causing poor user experience.

For this problem, a solution idea is to relieve congestion by enabling the sender to reduce a sending rate, to avoid the problem such as the increase in the data packet transmission delay or the data packet loss. For example, because importance (or priorities) of different data packets of a same service may be different, the sender may achieve an effect of reducing the sending rate by sending less or not sending some data packets of low importance, to achieve an objective of relieving congestion while user experience is ensured as much as possible. For example, video data in the VR service is used as an example. The video data may include a base-layer data packet and an enhancement-layer data packet. The base-layer data packet provides a bitstream of base image quality (for example, smooth image quality), and the enhancement-layer data packet provides a bitstream of higher image quality (for example, standard-definition image quality, high-definition image quality, and blu-ray image quality) that can be constructed on the basis of the base image quality. Therefore, the base-layer data packet has high importance while the enhancement-layer data packet has low importance. When the sender needs to reduce the sending rate, the sender may send only the base-layer data packet and may not send the enhancement-layer data packet. In this case, the video watched by the user may change from high-quality image quality (that is, the standard-definition image quality, the high-definition image quality, and the blu-ray image quality) to low-quality image quality (that is, the smooth image quality). In comparison with video freezing and incomplete image, an impact on user experience can be effectively reduced. In addition, after the congestion is relieved, the sender may be further enabled to increase the sending rate to resume the high-quality image quality, thereby ensuring user experience.

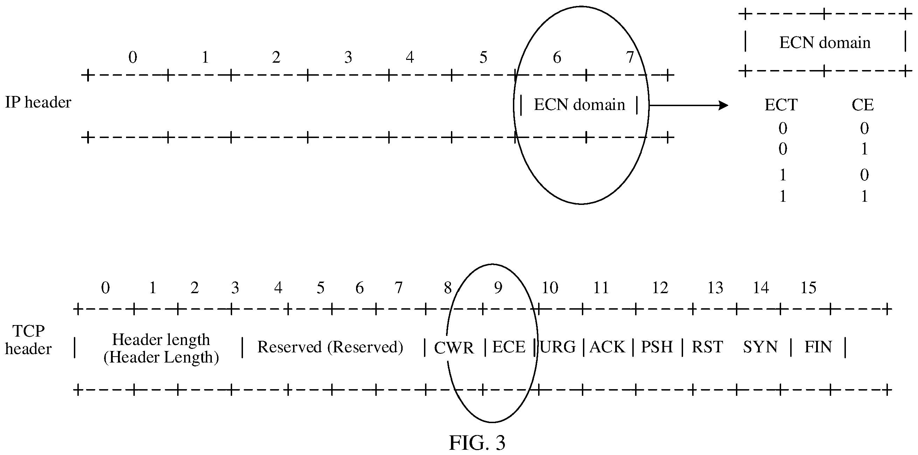

Based on the foregoing idea, in a possible implementation, a TCP congestion control algorithm is enhanced to notify the sender to adjust the sending rate of the data packet. Specifically, when data transmission is performed through the transport layer connection, to prevent excessive data from being injected into a network and overloading a network device or a link in the network, the sender may avoid network congestion as much as possible by using the TCP congestion control algorithm. To be specific, the sender may maintain one congestion window (congestion window, Cwnd). If no congestion occurs on the network, the sender gradually increases a value of the congestion window and continuously probes a network capacity to send more data packets. If congestion occurs on the network, the sender correspondingly reduces a value of the congestion window to reduce a volume of data injected into the network. Further, an explicit congestion notification (explicit congestion notification, ECN) may be further used to enhance the TCP congestion control algorithm. As shown in FIG. 3, the sender sets an ECN field in an internet protocol (internet protocol, IP) header of a sent data packet. When forwarding the data packet, if the network device determines that congestion occurs (where for example, the network device may determine, based on a queue length of a to-be-sent data packet, whether the congestion occurs, and when the queue length exceeds a specific threshold (for example, an ECN waterline value), the network device may determine that the congestion occurs), the network device modifies an ECN=01 or an ECN=10 in the ECN field in the IP header to an ECN=11 (where ECN=00 indicates that the packet does not support an ECN function). After receiving the data packet, the receiver sets, based on an identifier of the ECN=11 in the data packet, an ECN-echo (ECN-Echo, ECE) bit in a TCP header to 1 in an ACK packet returned to a transmit end, and uses the ECN-echo bit as an ECN identifier used for a backhaul congestion indication. Further, the sender may correspondingly adjust the value of the congestion window based on a proportion of the received ACK packet that includes the ECN identifier, and set a congestion window reduced (congestion window reduced, CWR) bit to 1 when sending a next data packet. Correspondingly, when the receiver receives the data packet with the CWR bit set to 1, the ECE bit in the subsequent returned ACK packet is not set to 1.

Specifically, for uplink transmission, when the access network device determines that the uplink data packet of the first service is congested, if an ECN=01 or an ECN=10 is in an ECN field in an IP header of the uplink data packet received by the access network device, the access network device may modify the ECN=01 or the ECN=10 to an ECN=11, and send the uplink data packet to the application server, and then the application server sets an ECE bit in a TCP header to 1 in an ACK packet returned to the terminal device. After receiving the ACK packet, the terminal device may adjust a sending rate. For downlink transmission, when the access network device determines that the downlink data packet of the first service is congested, if an ECN=01 or an ECN=10 is in an ECN field in an IP header of the downlink data packet received by the access network device, the access network device may modify the ECN=01 or the ECN=10 to an ECN=11, and send the downlink data packet to the terminal device, and then the terminal device sets an ECE bit in a TCP header to 1 in an ACK packet returned to the application server. After receiving the ACK packet, the application server may adjust a sending rate.

However, in the foregoing manner, when the access network device determines that the uplink/downlink data packet is congested, the access network device can notify the sender of the congestion only after receiving the uplink/downlink data packet with the ECN=01 or the ECN = 1 0, and consequently, the access network device cannot notify the sender of the congestion in time. In addition, the sender may learn, based on the information of the ECE=1, that the congestion exists, but cannot determine a proper value to which the sending rate is to be adjusted. Therefore, only blind rate adjustment may be performed. For example, the sender may reduce the sending rate to an excessively low value. This affects user experience. Alternatively, the sender does not reduce the sending rate low enough. This still causes congestion, and therefore, a process of adjusting the sending rate needs to be performed for a plurality of times to achieve an objective of relieving the congestion.

Based on this, embodiments of this application provide some possible communication methods for how to enable the sender to adjust the sending rate of the data packet. It should be noted that a specific implementation of adjusting (reducing or increasing) the sending rate by the sender is not limited in embodiments of this application. For example, the communication method provided in embodiments of this application may include a solution 1 and a solution 2.

In the solution 1, an access network device may generate first information, and send the first information to a first core network element, where the first information includes an identifier of a first QoS flow and transmission direction information, the first QoS flow is used to transmit a data packet of a first service, the transmission direction information indicates uplink transmission or downlink transmission, and the first information is used to request to adjust a sending rate of a data packet of the first service in a transmission direction indicated by the transmission direction information.

In this method, for downlink transmission, the access network device may send the first information to the first core network element, and then the first core network element requests or notifies an application server to adjust a sending rate. In comparison with the manner (where to be specific, after determining that congestion occurs, the access network device may need to wait for receiving the downlink data packet with the ECN=10 or the ECN=01, and after receiving the downlink data packet with the ECN=10 or the ECN=01, modify the ECN=10 or the ECN=01 to the ECN=11, and send the downlink data packet to the terminal device, and then the terminal device sends the ECE=1 to the application server, to notify the application server to adjust the sending rate) described above, in the solution 1 provided in this application, an information transmission path is short, and after determining that the congestion occurs, the access network device may directly send the first information (where for example, the access network device may generate a new data packet, and send the first information by using the data packet) without considering whether the downlink data packet with the ECN=10 or the ECN=01 is received. In this way, the application server can be quickly notified to adjust the sending rate of the downlink data packet, to relieve the congestion in time. For uplink transmission, the access network device may send the first information to the first core network element, and then the first core network element requests an application server to notify a terminal device to adjust a sending rate. In comparison with the manner (where to be specific, after determining that congestion occurs, the access network device may need to wait for receiving the uplink data packet with the ECN=10 or the ECN=01, and after receiving the uplink data packet with the ECN=10 or the ECN=01, modify the ECN=10 or the ECN=01 to the ECN=11, and send the uplink data packet to the application server, and then the application server sends the ECE=1 to the terminal device, to notify the terminal device to adjust the sending rate) described above, in the solution 1 provided in this application, after determining that the congestion occurs, the access network device may directly send the first information (where for example, the access network device may generate a new data packet, and send the first information by using the data packet) without considering whether the uplink data packet with the ECN=10 or the ECN=01 is received. In this way, the terminal device can be quickly notified to adjust the sending rate of the uplink data packet, to relieve the congestion in time. In addition, in the solution 1 provided in this application, the access network device does not need to modify the ECN in the data packet, so that data packet transmission security can be improved.

Further, the first information may further include second information, where the second information indicates a sending rate recommended by the access network device. In this way, a sender may adjust an actual sending rate based on the sending rate recommended by the access network device, to adjust the sending rate to a proper value to more quickly and effectively relieve congestion.

In the solution 2, an access network device may generate an access stratum control message, and send the access stratum control message to a terminal device, where the access stratum control message indicates that an uplink/downlink data packet of a first service is congested. In this manner, because the access stratum control message is transmitted quickly, the terminal device can be quickly notified to adjust a sending rate of the uplink data packet, or the terminal device can be quickly notified to notify an application server of the congestion.

In a solution 3, an access network device generates seventh information, where the seventh information indicates that an uplink/downlink data packet of a first service is congested; and sends the seventh information to a UPF network element. In this method, for uplink transmission, the access network device may send the seventh information to the UPF network element, and then the UPF network element modifies an ECN field in an IP header of the downlink data packet to an ECN=11, and sends the downlink data packet to a terminal device. For downlink transmission, the access network device may send the seventh information to the UPF network element, and then the UPF network element modifies an ECN field in an IP header of the uplink data packet to an ECN=11, and sends the uplink data packet to an application server. In this way, the access network device does not need to modify the ECN in the IP header of the uplink/downlink data packet while the congestion can be relieved, thereby improving data packet transmission security.

The following describes in detail the communication method provided in embodiments of this application with reference to Embodiment 1 to Embodiment 3.

### Embodiment 1

In Embodiment 1, a possible implementation procedure is described based on the foregoing solution 1.

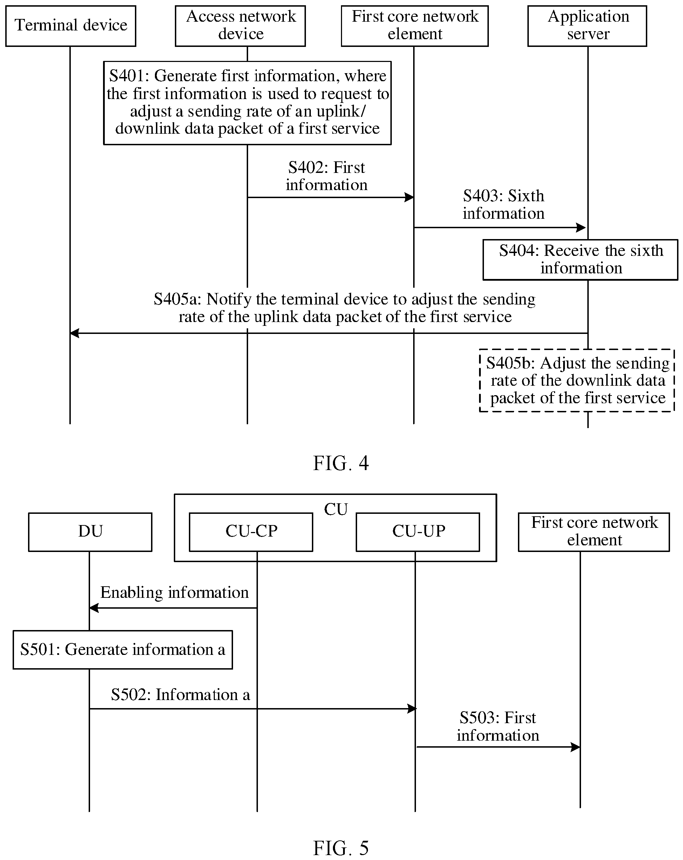

FIG. 4 is a schematic flowchart corresponding to a communication method according to Embodiment 1 of this application. As shown in FIG. 4, the method includes the following steps.

S401: An access network device generates first information, where the first information includes an identifier of a first QoS flow and transmission direction information.

S402: The access network device sends the first information to a first core network element.

Herein, the first QoS flow is used to transmit a data packet of a first service, and the transmission direction information indicates uplink transmission or downlink transmission. When the transmission direction information indicates the uplink transmission, the transmission direction information may be understood as an uplink transmission indication. In this case, the first information is used to request to adjust a sending rate of an uplink data packet of the first service, the first information is used to request to adjust a rate at which a terminal device sends the data packet of the first service, or the first information is used to request an application server to notify a terminal device to adjust a rate at which the terminal device sends the data packet of the first service. When the transmission direction information indicates the downlink transmission, the transmission direction information may be understood as a downlink transmission indication. In this case, the first information is used to request to adjust a sending rate of a downlink data packet of the first service, or the first information is used to request to adjust a rate at which an application server sends the data packet of the first service.

The uplink transmission is used as an example. That the first information is used to request to adjust a sending rate of an uplink data packet of the first service may mean that the first information is used to request to reduce the sending rate of the uplink data packet of the first service, or may mean that the first information is used to request to increase the sending rate of the uplink data packet of the first service.

When the first information is used to request to reduce the sending rate of the uplink data packet of the first service, there may be a plurality of factors that trigger the access network device to generate the first information. For example, if the access network device determines that the uplink data packet of the first service is congested, the access network device may generate the first information. There may be a plurality of specific implementations in which the access network device determines that the uplink data packet of the first service is congested. For example, the terminal device may report a buffer status report (buffer status report, BSR) to the access network device, where the BSR reflects a total volume of to-be-sent data on at least one logical channel for scheduling by the access network device, and then the access network device may determine, based on the BSR reported by the terminal device, whether the uplink data packet of the first service is congested. For another example, if the access network device determines that a transmission delay that is of the uplink data packet of the first service and that is between the access network device and the terminal device is greater than or equal to a preset transmission delay, the access network device may generate the first information. Herein, the transmission delay that is of the uplink data packet of the first service and that is between the access network device and the terminal device may be a transmission delay that is of a data packet included in a burst of the first service and that is between the access network device and the terminal device. A video service is used as an example. One burst may be understood as one video frame, and corresponds to one picture. In other words, one burst may include a plurality of data packets corresponding to one picture.

When the first information is used to request to increase the sending rate of the uplink data packet of the first service, there may also be a plurality of factors that trigger the access network device to generate the first information. For example, if the access network device determines that the sending rate needs to be temporarily adjusted when a guaranteed flow bit rate (guaranteed flow bit rate, GFBR), a maximum data burst volume (maximum data burst volume, MDBV), a packet delay budget, and a packet loss rate of the first service cannot be supported, the access network device may generate the first information. For another example, if the access network device determines that a higher guaranteed flow bit rate and a higher maximum data burst volume can be further supported when the packet delay budget and the packet loss rate of the first service are met, the access network device may generate the first information.

In this embodiment of this application, the first information may further include other possible information, for example, second information, where the second information indicates a sending rate recommended by the access network device. Further, if the transmission direction information indicates the uplink transmission, the second information indicates a sending rate that is of the uplink data packet and that is recommended by the access network device. If the transmission direction information indicates the downlink transmission, the second information indicates a sending rate that is of the downlink data packet and that is recommended by the access network device. The access network device may determine the recommended sending rate based on a transmission rate counted in one time window. The time window may be an averaging window. Duration of the averaging window is locally set by the access network device, or is configured by an SMF network element for the access network device, where a value range is 0 ms to 4096 ms, and a default value is generally 2000 ms.

In an example, the second information may include at least one of the following (1) to (5).
(1) Sending rate recommended by the access network device: A value of the sending rate may be an actual rate value, for example, 700 kbit/s. The sending rate may be a temporary maximum QoS flow bit rate or a guaranteed bit rate (guaranteed bit rate, GBR).
(2) Index value of the sending rate recommended by the access network device: One index value may correspond to one rate. For example, Table 1 shows an example of a correspondence between the rate and the index value.

**Table 1: Example of the correspondence between the rate and the index value**

| Index value | Rate (kbit/s) | Index value | Rate (kbit/s) |
|---|---|---|---|
| 0 | Note 1 | 32 | 700 |
| 1 | 0 | 33 | 800 |
| 2 | 9 | 34 | 900 |
| 3 | 11 | 35 | 1000 |
| 4 | 13 | 36 | 1100 |
| 5 | 17 | 37 | 1200 |
| 6 | 21 | 38 | 1300 |
| 7 | 25 | 39 | 1400 |
| 8 | 29 | 40 | 1500 |
| 9 | 32 | 41 | 1750 |
| 10 | 36 | 42 | 2000 |
| 11 | 40 | 43 | 2250 |
| 12 | 48 | 44 | 2500 |
| 13 | 56 | 45 | 2750 |
| 14 | 72 | 46 | 3000 |
| 15 | 88 | 47 | 3500 |
| 16 | 104 | 48 | 4000 |
| 17 | 120 | 49 | 4500 |
| 18 | 140 | 50 | 5000 |
| 19 | 160 | 51 | 5500 |
| 20 | 180 | 52 | 6000 |
| 21 | 200 | 53 | 6500 |
| 22 | 220 | 54 | 7000 |
| 23 | 240 | 55 | 7500 |
| 24 | 260 | 56 | 8000 |
| 25 | 280 | 57 | Reserved (Reserved) |
| 26 | 300 | 58 | Reserved |
| 27 | 350 | 59 | Reserved |
| 28 | 400 | 60 | Reserved |
| 29 | 450 | 61 | Reserved |
| 30 | 500 | 62 | Reserved |
| 31 | 600 | 63 | Reserved |
| Note 1: For a bit rate recommendation message, this index indicates that no (new) bit rate recommendation is given. | | | |

For the foregoing index value "0", the uplink transmission is used as an example. For example, the terminal device sends the uplink data packet of the first service at a rate of 25 kbit/s. After determining that the uplink data packet is congested, the access network device sends first information 1 (where the first information 1 includes the index value "3", indicating that the sending rate recommended by the access network device is 11 kbit/s), to request the terminal device to adjust the sending rate, and then the terminal device may adjust the sending rate to 11 kbit/s based on the index value "3". Subsequently, after the congestion is relieved, the access network device may send first information 2, where the first information 2 includes the index value "0", indicating that all sending rates previously recommended by the access network device are invalid, and no new bit rate recommendation is given. In this case, the terminal device may adjust the sending rate to the GBR based on the index value "0".

In an example, the access network device may obtain a rate corresponding to an index value from signaling sent by the core network element or the terminal device. For example, the SMF network element indicates, in a PDU session resource establishment request message, a rate corresponding to an index value that can be supported by the first QoS flow corresponding to the first service. For another example, the terminal device indicates, in an assistance information reporting message, a rate corresponding to an index value that can be supported by a logical channel corresponding to the first QoS flow. Alternatively, the rate corresponding to the index value may be agreed on in a protocol.

(3) Frame rate that is of the first service and that is recommended by the access network device: The first service may be a video service. A video may be composed of continuous images (pictures, photos, or the like) played continuously. When 24 images are played quickly per second, human eyes consider that the images are continuous pictures (namely, a video). A frame rate is a quantity of images played per second. For example, 24 frames indicate that 24 images are played per second, 60 frames indicate that 60 images are played per second, and so on. A higher frame rate indicates a smoother and more vivid animation effect.

One video frame may be understood as one image (where in other words, one video frame may include a data packet corresponding to one image). For example, the video frame may be classified into an I-frame, a P-frame, and a B-frame. The I-frame, also referred to as an intra-coded picture, is an independent frame with all information. The 1-frame can be independently decoded without referring to other images, and may be simply understood as a static picture. The P-frame, also referred to as an inter prediction coding picture, can be encoded only by referring to a previous I-frame. The P-frame indicates a difference between a current frame and a previous frame (where the previous frame can be the 1-frame or a P-frame). During decoding, a buffered picture needs to be superimposed with the difference defined in the current frame to generate a final picture. The B-frame, also referred to as a bidirectionally predicted picture, records differences between a current frame and a previous frame and a backward frame. In other words, to decode the B-frame, not only a previous buffered picture needs to be obtained, but also a decoded picture needs to be obtained. The previous picture and the backward picture are superimposed with data of the current frame, to obtain a final picture. The I-frame is a key frame, and the B-frame and the P-frame are non-key frames.

(4) Maximum data burst volume that is of the first service and that is recommended by the access network device (that is, a maximum data volume of a key frame or a maximum data volume of a frame including a key slice): may be understood as a maximum data volume that can be successfully sent within the packet delay budget. One image frame may be divided into a plurality of slices, and one slice corresponds to data of one region of one image. Further, the slice is classified into a key slice and a non-key slice. The key slice can be encoded and decoded independently, while the non-key slice needs to be encoded and decoded by referring to a previous slice.

(5) Image resolution that is of the first service and that is recommended by the access network device: The image resolution may be understood as a size of an image, that is, a quantity of pixels.

In other words, when the access network device requests a sender to adjust the sending rate of the data packet, to help the sender adjust the rate to a proper value, the access network device may include the second information in the first information, so that the sender may learn of, based on the second information, the sending rate recommended by the access network device, and adjust an actual rate based on the sending rate recommended by the access network device. It may be understood that, in another possible embodiment, the access network device may include, in the first information, other reference information that helps the sender adjust the rate. For example, a VR service is used as an example. The access network device may alternatively include, in the first information, information about whether the VR service is in a field of view (field of view, FOV) or in a non-field of view. The field of view is a range that can be observed by a user at a given moment, and the non-field of view is a 360-degree angle range. Image definition of the non-field of view is lower. Therefore, in a case of congestion, the sender may provide only a video frame of the non-field of view, to reduce a transmission rate and ensure smooth watching of the user.

In a possible implementation, before S401, a second core network element (for example, the SMF network element) may send enabling information to the access network device, where the enabling information is used to enable the access network device to request to adjust the sending rate of the uplink/downlink data packet of the first service. For example, the SMF network element may send the PDU session resource establishment request message or a PDU session resource modification request message to the access network device. The PDU session resource establishment request message or the PDU session resource modification request message may include the identifier of the first QoS flow and the enabling information. The PDU session resource establishment request message is used to request to establish the first QoS flow, and the PDU session resource modification request message is used to request to modify the first QoS flow. In an example, the enabling information may be Boolean-type information. When a value of the enabling information is true (TRUE), it indicates that the access network device is allowed to request to adjust the sending rate of the uplink/downlink data packet of the first service. When a value of the enabling information is false (FALSE), it indicates that the access network device is not allowed to request to adjust the sending rate of the uplink/downlink data packet of the first service. Alternatively, the enabling information may be enumeration-type information. When a value of the enabling information is allowed (Allowed), it indicates that the access network device is allowed to request to adjust the sending rate of the uplink/downlink data packet of the first service. When a value of the enabling information is not allowed (Not allowed), it indicates that the access network device is not allowed to request to adjust the sending rate of the uplink/downlink data packet of the first service. Correspondingly, after receiving the PDU session resource establishment request message or the PDU session resource modification request message, the access network device may determine, based on the enabling information, whether the access network device is allowed to request to adjust the sending rate of the uplink/downlink data packet of the first service. If the access network device is allowed to request to adjust the sending rate of the uplink/downlink data packet of the first service, the access network device may generate the first information when a trigger condition for generating the first information is met.

In addition, in another possible embodiment, for the uplink transmission, if the access network device determines that the trigger condition (where for example, it is determined that the uplink data packet of the first service is congested) for generating the first information is met, and receives the uplink data packet of the first service, where an ECN=01 or an ECN=10 is in the uplink data packet, the access network device may generate the first information, and send the first information to the first core network element. In other words, for the uplink transmission, after determining that congestion occurs, the access network device may directly send the first information to the first core network element, to request to adjust the sending rate of the uplink data packet of the first service without considering whether the uplink data packet with the ECN=01 or the ECN=10 is received. Alternatively, after determining that congestion occurs, the access network device may send the first information to the first core network element after receiving the uplink data packet with the ECN=01 or the ECN=10 (where the ECN of the uplink data packet does not need to be modified), to request to adjust the sending rate of the uplink data packet of the first service.

For the downlink transmission, if the access network device determines that the trigger condition (where for example, it is determined that the downlink data packet of the first service is congested) for generating the first information is met, and receives the downlink data packet of the first service, where an ECN=01 or an ECN=10 is in the downlink data packet, the access network device may generate the first information, and send the first information to the first core network element, to request to adjust the sending rate of the downlink data packet of the first service. In other words, for the downlink transmission, after determining that congestion occurs, the access network device may directly send the first information to the first core network element, to request to adjust the sending rate of the downlink data packet of the first service without considering whether the downlink data packet with the ECN=01 or the ECN=10 is received. Alternatively, after determining that congestion occurs, the access network device may send the first information to the first core network element after receiving the downlink data packet with the ECN=01 or the ECN=10 (where the ECN of the downlink data packet does not need to be modified), to request to adjust the sending rate of the downlink data packet of the first service.

S403: After receiving the first information, the first core network element obtains sixth information based on the first information, and sends the sixth information to the application server.

Herein, if the first information includes the identifier of the first QoS flow and the transmission direction information, the sixth information includes information used to identify the first service and the transmission direction information. If the first information includes the identifier of the first QoS flow, the transmission direction information, and the second information, the sixth information includes information used to identify the first service, the transmission direction information, and the second information. In other words, a difference between the sixth information and the first information lies in that the sixth information does not include the identifier of the first QoS flow, but includes the information used to identify the first service.

For S402 and S403, the following describes two possible implementations: an implementation 1 and an implementation 2.

### Implementation 1

In S402, the access network device may send the first information through a user plane path. In this case, the first core network element may be a user plane network element, for example, a UPF network element.

In an example, the access network device may send the first information to the UPF network element through a first N3 tunnel. The first N3 tunnel may be established for a PDU session to which the first QoS flow belongs. In this case, if the PDU session to which the first QoS flow belongs includes only the first QoS flow, and does not include another QoS flow, the first information may alternatively not include the identifier of the first QoS flow. In another example, the access network device may send a first data packet to the UPF network element, where the first information is carried in a general packet radio service (general packet radio service, GPRS) tunnelling protocol-user plane (GPRS tunnelling protocol-user plane, GTP-U) header of the first data packet, and the first data packet may be a data packet of the first service. The first data packet may be a data packet generated by the access network device. In this case, a payload of the first data packet may be empty. Alternatively, the access network device receives a second data packet (where the second data packet may be a data packet of the first service) from the terminal device, and encapsulates the second data packet according to a GTP-U protocol, to obtain the first data packet. In this case, a payload of the first data packet includes the second data packet. In other words, after receiving the uplink data packet that is of the first service and that is sent by the terminal device, the access network device may send the first information by using the uplink data packet. Alternatively, the access network device may directly send the first information without considering whether the uplink data packet of the first service is currently received, to more quickly notify the sender to adjust the sending rate.

Correspondingly, in S403, after receiving the first information, the UPF network element may obtain 5-tuple information of the first service based on the identifier of the first QoS flow and a traffic filtering template (traffic filtering template, TFT) corresponding to the PDU session to which the first QoS flow belongs, where the 5-tuple information is used to identify the first service.

It should be noted that there may be a plurality of specific implementations in which the first information is carried in the GTP-U header of the first data packet. For example, the first information may be carried in one field of the GTP-U header. The following describes two possible implementations with reference to Table 2 and Table 3.

Table 2 shows one field of the GTP-U header. The field includes the identifier of the first QoS flow. Further, two domains: a domain a1 and a domain a2 may be added to the field. The domain a1 is used to carry the transmission direction information, and the domain a1 may include one bit. When a value of the bit is 1, it indicates the uplink transmission; and when a value of the bit is 0, it indicates the downlink transmission, or vice versa. The information a2 is used to carry the second information, and a quantity of bits included in the domain a2 may be set according to an actual situation. This is not specifically limited.

**Table 2: Example 1 of the first information carried in the GTP-U header**

| Bit (bits) | | | | | | | |
|---|---|---|---|---|---|---|---|
| 7 | 6 | 5 | 4 | 3 | 2 | 1 | 0 |
| PDU type (=1) | | | | QMP | Downlink delay indication | Uplink delay indication | **Domain a1** |
| Spare | | Identifier of the first QoS flow | | | | | |
| Downlink sending time stamp repeated DL Sending Time Stamp Repeated | | | | | | | |
| Downlink received time stamp DL Received Time Stamp | | | | | | | |
| Uplink sending time stamp UL Sending Time Stamp | | | | | | | |
| Downlink delay result DL Delay Result | | | | | | | |
| Uplink delay result UL Delay Result | | | | | | | |
| **Domain a2** | | | | | | | |
| Padding | | | | | | | |

Table 3 shows one field of the GTP-U header. The field includes the identifier of the first QoS flow. Further, three domains: a domain b1, a domain b2, and a domain b3 may be added to the field. The domain b1 is used to carry a rate recommendation indication, where the rate recommendation indication indicates whether there is the transmission direction information and the second information. The domain b1 may include one bit. When a value of the bit is 1, it indicates that there is the transmission direction information and the second information. When a value of the bit is 0, it indicates that there is no transmission direction information and second information. The domain b2 is used to carry the transmission direction information. The domain b3 is used to carry the second information.

**Table 3: Example 2 of the first information carried in the GTP-U header**

| Bit | | | | | | | |
|---|---|---|---|---|---|---|---|
| 7 | 6 | 5 | 4 | 3 | 2 | 1 | 0 |
| PDU type (=1) | | | | QMP | Downlink delay indication | Uplink delay indication | **Domain b1** |
| Spare | Identifier of the first QoS flow | | | | | | |
| Spare | | | | | | | |
| Downlink sending time stamp repeated DL Sending Time Stamp Repeated | | | | | | | |
| Downlink received time stamp DL Received Time Stamp | | | | | | | |
| Uplink sending time stamp UL Sending Time Stamp | | | | | | | |
| Downlink delay result DL Delay Result | | | | | | | |
| Uplink delay result UL Delay Result | | | | | | | |
| **Domain b2** | | | | | | | |
| **Domain b3** | | | | | | | |
| Padding | | | | | | | |

Table 4 shows one field of the GTP-U header. The field includes the identifier of the first QoS flow. Further, four domains: a domain c1, a domain c2, a domain c3, and a domain c4 may be added to the field. The domain c1 is used to carry an uplink rate recommendation indication, where the uplink rate recommendation indication indicates whether there is second information corresponding to an uplink transmission direction. The domain c1 may include one bit. When a value of the bit is 1, it indicates that there is the second information corresponding to the uplink transmission direction. When a value of the bit is 0, it indicates that there is no second information corresponding to the uplink transmission direction. The second information corresponding to the uplink transmission direction indicates a sending rate that is of the uplink data packet and that is recommended by the access network device. The domain c2 is used to carry a downlink rate recommendation indication, where the downlink rate recommendation indication indicates whether there is second information corresponding to a downlink transmission direction. The second information corresponding to the downlink transmission direction indicates a sending rate that is of the downlink data packet and that is recommended by the access network device. The domain c3 is used to carry the second information corresponding to the uplink transmission direction. The domain c4 is used to carry the second information corresponding to the downlink transmission direction.

**Table 4: Example 3 of the first information carried in the GTP-U header**

| Bit | | | | | | | |
|---|---|---|---|---|---|---|---|
| 7 | 6 | 5 | 4 | 3 | 2 | 1 | 0 |
| PDU type (=1) | | | | QMP | Downlink delay indication | Uplink delay indication | **Domain c1** |
| Spare | **Domain c2** | Identifier of the first QoS flow | | | | | |
| Spare | | | | | | | |
| Downlink sending time stamp repeated DL Sending Time Stamp Repeated | | | | | | | |
| Downlink received time stamp DL Received Time Stamp | | | | | | | |
| Uplink sending time stamp UL Sending Time Stamp | | | | | | | |
| Downlink delay result DL Delay Result | | | | | | | |
| Uplink delay result UL Delay Result | | | | | | | |
| **Domain c3** | | | | | | | |
| **Domain c4** | | | | | | | |
| Padding | | | | | | | |

### Implementation 2

In S402, the access network device may send the first information through a control plane path. In this case, the first core network element may be a control plane network element, for example, an AF network element. The access network device may send the first information to the AF network element through another possible core network element (for example, the SMF network element or a PCF network element). Correspondingly, in S403, after receiving the first information, the AF network element may determine, based on the identifier of the first QoS flow and a correspondence between a QoS flow identifier and a service identifier (identifier, ID), an identifier of the first service corresponding to the first QoS flow. The correspondence between the QoS flow identifier and the service identifier may be obtained by the AF network element from another network element in advance. A specific implementation in which the AF network element obtains the correspondence between the QoS flow identifier and the service identifier is not limited in this embodiment of this application.

S404: The application server receives the sixth information. If the transmission direction information in the sixth information indicates the uplink transmission, S405a may be performed. If the transmission direction information in the sixth information indicates the downlink transmission, S405b may be performed.

S405a: The application server notifies the terminal device to adjust the sending rate of the uplink data packet of the first service.

Herein, in an example, the application server may send application layer signaling to the terminal device, where the application layer signaling may include the second information. Then, after receiving the application layer signaling, the terminal device may adjust the sending rate of the uplink data packet of the first service based on the sending rate recommended by the access network device. The sending rate obtained through adjustment of the terminal device may be the same as or different from the sending rate recommended by the access network device.

Optionally, after adjusting the sending rate of the uplink data packet of the first service, the terminal device may further notify the access network device of the adjusted sending rate. There may be a plurality of specific implementations. For example, the terminal device may send an access stratum message to the access network device, where the access stratum message includes third information, and the third information indicates the adjusted sending rate.

S405b: The application server adjusts the sending rate of the downlink data packet of the first service.

For example, the application server may adjust the sending rate of the downlink data packet of the first service based on the sending rate recommended by the access network device. The sending rate obtained through adjustment of the application server may be the same as or different from the sending rate recommended by the access network device.

Optionally, after adjusting the sending rate of the downlink data packet of the first service, the application server may further send third information to the access network device through the core network element, where the third information indicates the adjusted sending rate. In this way, when sending the downlink data packet of the first service to the terminal device, the access network device may refer to the sending rate obtained through adjustment of the application server.

In the method in Embodiment 1, for the downlink transmission, the access network device may send the first information to the first core network element, and then the first core network element sends the sixth information to the application server. In comparison with a manner in which the access network device first sends an ECN=11 to the terminal device, and then the terminal device sends an ECE=1 to the application server, an information transmission path is short, and when sending the first information, the access network device may not need to consider whether the downlink data packet with the ECN=10 or the ECN=01 is received. In this way, the application server can be quickly notified to adjust the sending rate of the downlink data packet, to relieve congestion in time. For the uplink transmission, the access network device may send the first information to the first core network element, and then the first core network element sends the sixth information to the application server, and the application server notifies the terminal device to adjust the sending rate. In comparison with a manner in which the access network device first sends an ECN=11 to the application server, and then the application server sends an ECE=1 to the terminal device, when sending the first information, the access network device may not need to consider whether the uplink data packet with the ECN=10 or the ECN=01 is received. In this way, the terminal device can be quickly notified to adjust the sending rate of the uplink data packet, to relieve congestion in time. In addition, the first information may further include the second information, where the second information indicates the sending rate recommended by the access network device. In this way, the sender may adjust an actual sending rate based on the sending rate recommended by the access network device, to adjust the sending rate to a proper value to more quickly and effectively relieve congestion.

In Embodiment 1, the access network device is described as a whole. It can be learned from the foregoing descriptions of the access network device that the access network device may alternatively include split nodes, for example, as shown in FIG. 2b and FIG. 2c.

With reference to Embodiment 2, the following describes, based on the access network devices shown in FIG. 2b and FIG. 2c, interaction between different nodes included in the access network devices.

### Embodiment 2

FIG. 5 is a schematic flowchart corresponding to a communication method according to Embodiment 2 of this application. As shown in FIG. 5, the method includes the following steps.

S501: A DU generates information a, where the information a includes transmission direction information, and the information a is used to request to adjust a sending rate of a data packet of a first service in a transmission direction indicated by the transmission direction information.

For example, the information a may further include second information. For descriptions of the second information, refer to Embodiment 1.

For example, there may be a plurality of factors that trigger the DU to generate the information a. For example, refer to the factors that trigger the access network device to generate the first information and that are described in Embodiment 1.

In addition, in a possible implementation, before S501, a second core network element (for example, an SMF network element) may send enabling information to a CU (or a CU-CP), where the enabling information is used to enable the DU to request to adjust a sending rate of an uplink/downlink data packet of the first service. Correspondingly, after receiving the enabling information, the CU (or the CU-CP) may send the enabling information to the DU. For example, the CU (or the CU-CP) may send the enabling information to the DU by using a user context setup request (UE context setup request) message. For descriptions of the enabling information, refer to Embodiment 1.

S502: The DU sends the information a to the CU (or a CU-UP) through a first tunnel, where the first tunnel corresponds to a first DRB, the first DRB corresponds to a first QoS flow, and the first QoS flow is used to transmit the data packet of the first service.

For example, the DU may send an assistance information data (assistance information data) frame to the CU (or the CU-UP), where the information a may be carried in a GTP-U header of the assistance information data frame. For example, the information a may be carried in one field of the GTP-U header. The following describes two possible implementations with reference to Table 4 and Table 5.

Table 5 shows one field of the GTP-U header, and four domains: a domain d1, a domain d2, a domain d3, and a domain d4 may be added to the field. The domain d1 indicates whether there is second information corresponding to an uplink transmission direction. The domain d2 indicates whether there is second information corresponding to a downlink transmission direction. The domain d3 is used to carry the second information corresponding to the uplink transmission direction. The domain d4 is used to carry the second information corresponding to the downlink transmission direction.

**Table 5: Example 1 of the information a carried in the GTP-U header**

| Bit | | | | | | | | | | |
|---|---|---|---|---|---|---|---|---|---|---|
| 7 | 6 | 5 | 4 | 3 | 2 | 1 | 0 | | | |
| PDU type (=2) | | | | PDCP duplication indication | PDCP duplication indication | Downlink delay indication | Uplink delay indication | | | |
| Reserved | | | | | **Domain d2** | **Domain** | PDCP | | | |
| | | | | | | **d1** | duplication activation suggestion | | | |
| Number of assistance information fields Number of Assistance Information Fields | | | | | | | | | | |
| Assistance information type Assistance Information Type | | | | | | | | | | |
| Number of octets for radio quality assistance information fields Number of octets for Radio Quality Assistance Information Fields | | | | | | | | | | |
| Radio quality assistance information Radio Quality Assistance Information | | | | | | | | | | |
| Downlink delay result UL Delay DU Result | | | | | | | | | | |
| Uplink delay result DL Delay DU Result | | | | | | | | | | |
| **Domain d3** | | | | | | | | | | |
| **Domain d4** | | | | | | | | | | |

Table 6 shows one field of the GTP-U header, and three domains: a domain e1, a domain e2, and a domain e3 may be added to the field. The domain e1 is used to carry a rate recommendation indication, where the rate recommendation indication indicates whether there is the information a. The domain e1 may include one bit. When a value of the bit is 1, it indicates that there is the information a. When a value of the bit is 0, it indicates that there is no information a. Table 5 is shown by using an example in which there is the information a. The domain e2 is used to carry the transmission direction information. The information e3 is used to carry the second information.

**Table 6: Example 2 of the information a carried in the GTP-U header**

| Bit | | | | | | | |
|---|---|---|---|---|---|---|---|
| 7 | 6 | 5 | 4 | 3 | 2 | 1 | 0 |
| PDU type (=2) | | | | PDCP duplication indication | PDCP duplication indication | Downlink delay indication | Uplink delay indication |
| **Domain e1** | Reserved | | | | | | PDCP duplication activation suggestion |
| Number of assistance information fields Number of Assistance Information Fields | | | | | | | |
| Assistance information type Assistance Information Type | | | | | | | |
| Number of octets for radio quality assistance information fields Number of octets for Radio Quality Assistance Information Fields | | | | | | | |
| Radio quality assistance information Radio Quality Assistance Information | | | | | | | |
| Downlink delay result UL Delay DU Result | | | | | | | |
| Uplink delay result DL Delay DU Result | | | | | | | |
| **Domain e2** | | | | | | | |
| **Domain e3** | | | | | | | |

S503: The CU (or the CU-UP) receives the information a from the DU through the first tunnel, and sends the first information to a first core network element. For descriptions of the first information, refer to Embodiment 1.

For a procedure after the first core network element receives the first information, refer to S403 to S405b in Embodiment 1. Details are not described again.

### Embodiment 3

In Embodiment 3, a possible implementation procedure is described based on the foregoing solution 2.

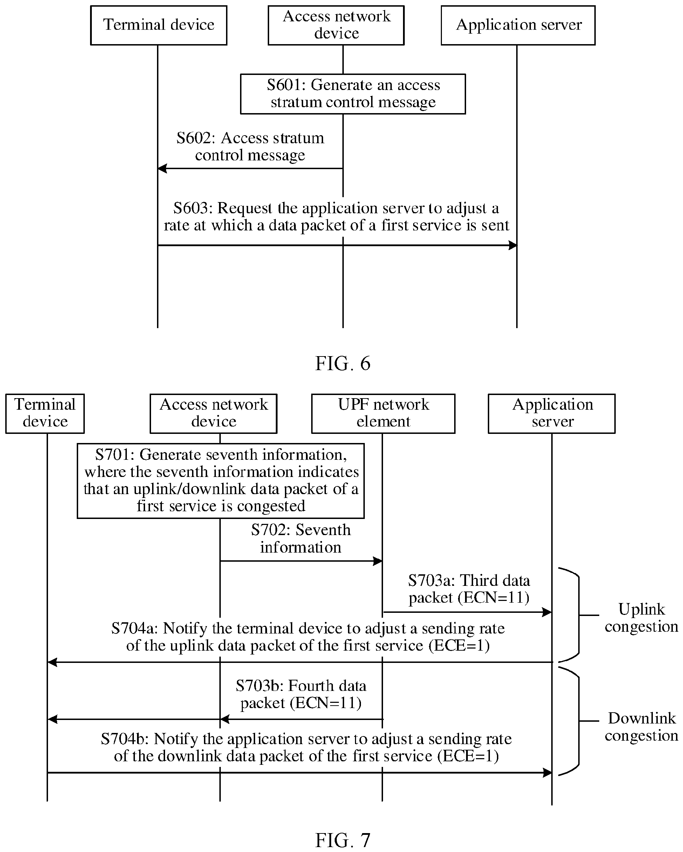

FIG. 6 is a schematic flowchart corresponding to a communication method according to Embodiment 3 of this application. As shown in FIG. 6, the method includes the following steps.

S601: An access network device generates an access stratum control message, where the access stratum control message indicates that a downlink data packet of a first service is congested.

S602: The access network device sends the access stratum control message to a terminal device.

Herein, there may be a plurality of implementations in which the access stratum control message indicates that the downlink data packet of the first service is congested. For example, the access stratum control message may include fourth information, where the fourth information indicates that the downlink data packet of the first service is congested. For example, the fourth information may include low-latency, low-loss, scalable-throughput (Low-latency, Low-loss, Scalable-throughput, L4S) marking, and optionally, may further include a downlink transmission indication and information used to identify the first service. The L4S marking may be an ECN=11, and the downlink transmission indication may indicate that congestion occurs in a downlink transmission direction.

In an example, the access stratum control message may be a MAC layer control message. The MAC layer control message may include a MAC subheader and a MAC CE. The MAC CE includes the L4S marking (for example, the ECN=11), the downlink transmission indication, and the information used to identify the first service, where the information used to identify the first service may include a logical channel identifier corresponding to a first QoS flow, and the first QoS flow is used to transmit a data packet of the first service. The downlink transmission indication is optional. For example, the MAC CE includes the L4S marking (for example, the ECN=11) and the information used to identify the first service. The MAC subheader includes a predefined logical channel identifier, where the predefined logical channel identifier indicates that the MAC layer control message carries the L4S marking.

It may be understood that, in this example, if the access network device uses a split architecture, a DU may generate the access stratum control message, and send the access stratum control message to the terminal device.

In another example, the access stratum control message may be a PDCP layer control message. The PDCP layer control message may be generated by a PDCP layer entity corresponding to a first DRB, where the first DRB corresponds to a first QoS flow, and the first QoS flow is used to transmit a data packet of the first service. The PDCP layer control message includes a PDCP header and a PDCP payload. The PDCP payload may include the L4S marking and the downlink transmission indication. The PDCP header includes a predefined PDU type, where the predefined PDU type indicates that the PDCP layer control message carries the L4S marking.

It may be understood that, in this example, if the access network device uses a split architecture, a CU (or a CU-CP) may generate the access stratum control message, and send the access stratum control message to the terminal device through a DU.

S603: The terminal device notifies an application server of the congestion based on the access stratum control message.

For example, after receiving the access stratum control message, the terminal device may set an ECE bit in an uplink ACK packet to 1 when sending the uplink ACK packet to the application server. After receiving the uplink ACK packet, the application server may adjust a sending rate of the downlink data packet of the first service.

In a possible implementation, before S603, the access network device may send fifth information to the terminal device, where the fifth information is used to enable the terminal device to process the foregoing access stratum control message. The fifth information may be carried in an RRC reconfiguration message.

It should be noted that the procedure shown in FIG. 6 uses downlink transmission as an example. The foregoing solution is also extended to be applied to an uplink transmission direction. For example, the access stratum control message in S601 may indicate that an uplink data packet of the first service is congested, and the MAC CE includes the L4S marking, an uplink transmission indication, and the information used to identify the first service. Therefore, after the access network device sends the access stratum control message to the terminal device, the terminal device may request, based on the access stratum control message, a local application in the terminal device to adjust a sending rate of the uplink data packet of the first service. The uplink transmission indication may indicate that congestion occurs in the uplink transmission direction, and the uplink transmission indication is optional. For example, the MAC CE includes the L4S marking (for example, the ECE=1) and the information used to identify the first service.

In the foregoing manner, the downlink transmission is used as an example. The access network device sends the access stratum control message to the terminal device to indicate that the downlink data packet is congested. In comparison with modifying an ECN in an IP header of the downlink data packet to the ECN=11, the manner is more flexible and quicker. In addition, in the CU-DU split architecture, according to a solution in a conventional technology, if a scheduling function entity on the DU detects that a scheduling delay becomes longer, the scheduling function entity may determine that a data packet is congested, and then the DU may notify, through an F1 interface, the CU that the congestion occurs, so that the CU sets, to 11, an ECN field of an IP data packet that is not delivered to the DU and for which no PDCP PDU is generated, and then delivers the IP data packet to the DU. In this case, the data packet is arranged at a tail of a MAC scheduling queue, and the data packet with the ECN=11 can be scheduled only after a previous data packet is sent. Consequently, the terminal device cannot be notified in time. In this embodiment of this application, when the access stratum control message is the MAC layer control message, after the DU senses the congestion, the DU may generate the MAC layer control message, and does not need to notify the CU of the congestion, so that notification signaling can quickly arrive at the terminal device, and the terminal device can quickly respond to generate a packet with the ECE=1 and send the packet to the application server.

### Embodiment 4

In Embodiment 4, a possible implementation procedure is described based on the foregoing solution 3.

FIG. 7 is a schematic flowchart corresponding to a communication method according to Embodiment 4 of this application. As shown in FIG. 7, the method includes the following steps.

S701: An access network device generates seventh information, where the seventh information indicates that an uplink/downlink data packet of a first service is congested.

S702: The access network device sends the seventh information to a UPF network element, and correspondingly, the UPF network element may receive the seventh information.

Herein, there may be a plurality of manners in which the seventh information indicates that the uplink/downlink data packet of the first service is congested, for example, a manner 1 and a manner 2.

Manner 1: The seventh information includes an identifier of a first QoS flow, transmission direction information, and marking for congestion. The first QoS flow is used to transmit a data packet of the first service. The marking for congestion may be L4S marking, and the L4S marking is, for example, an ECN=11. The transmission direction information indicates uplink transmission or downlink transmission. When the transmission direction information indicates the uplink transmission, the transmission direction information may be understood as an uplink transmission indication. In this case, the seventh information indicates that the uplink data packet of the first service is congested, the seventh information is used to request to reduce a sending rate of the uplink data packet of the first service, or the seventh information is used to request to reduce a rate at which a terminal device sends the data packet of the first service. When the transmission direction information indicates the downlink transmission, the transmission direction information may be understood as a downlink transmission indication. In this case, the seventh information indicates that the downlink data packet of the first service is congested, the seventh information is used to request to reduce a sending rate of the downlink data packet of the first service, or the seventh information is used to request to reduce a rate at which an application server sends the data packet of the first service.

Manner 2: The seventh information includes an identifier of a first QoS flow and marking for uplink congestion or marking for downlink congestion. When the seventh information includes the identifier of the first QoS flow and the marking for uplink congestion, the seventh information indicates that the uplink data packet of the first service is congested. When the seventh information includes the identifier of the first QoS flow and the marking for downlink congestion, the seventh information indicates that the downlink data packet of the first service is congested.

In a possible implementation, the uplink transmission is used as an example. If the access network device determines that the uplink data packet of the first service is congested, the access network device may generate the seventh information. For an implementation in which the access network device determines that the uplink data packet of the first service is congested, refer to the descriptions in Embodiment 1.

In a possible implementation, before S701, an SMF network element may send enabling information to the access network device, where the enabling information is used to enable the access network device to indicate that the uplink/downlink data packet of the first service is congested, the enabling information is used to enable the access network device to request to reduce the sending rate of the uplink/downlink data packet of the first service, or the enabling information is used to enable the access network device to send a congestion indication of the downlink/downlink transmission of the first service. For example, the SMF network element may send a PDU session resource establishment request message or a PDU session resource modification request message to the access network device. The PDU session resource establishment request message or the PDU session resource modification request message may include the identifier of the first QoS flow and the enabling information. The PDU session resource establishment request message is used to request to establish the first QoS flow, and the PDU session resource modification request message is used to request to modify the first QoS flow. In an example, the enabling information may be Boolean-type information. When a value of the enabling information is TRUE, it indicates that the access network device is allowed to request to reduce the sending rate of the uplink/downlink data packet of the first service. When a value of the enabling information is FALSE, it indicates that the access network device is not allowed to request to reduce the sending rate of the uplink/downlink data packet of the first service. Alternatively, the enabling information may be enumeration-type information. When a value of the enabling information is Allowed, it indicates that the access network device is allowed to request to reduce the sending rate of the uplink/downlink data packet of the first service. When a value of the enabling information is Not allowed, it indicates that the access network device is not allowed to request to reduce the sending rate of the uplink/downlink data packet of the first service. Correspondingly, after receiving the PDU session resource establishment request message or the PDU session resource modification request message, the access network device may determine, based on the enabling information, whether the access network device is allowed to request to reduce the sending rate of the uplink/downlink data packet of the first service. If the access network device is allowed to request to reduce the sending rate of the uplink/downlink data packet of the first service, the access network device may generate the seventh information when a trigger condition for generating the seventh information is met.

Optionally, the enabling information may further include trigger condition information, for example, a length L1 of an accumulated data packet cache queue of the first service and a statistics time window T1. Therefore, the access network device (for example, a DU of the access network device) may observe, in the statistics time window T1, whether the accumulated data packet cache queue of the first service reaches L1. If the accumulated data packet cache queue reaches L1, the access network device determines that the trigger condition for generating the seventh information is met. It may be understood that the access network device may smoothly move the observation window every X milliseconds. As long as the access network device observes, in the statistics time window T1, that the accumulated data packet cache queue of the first service reaches L1, the access network device determines that the trigger condition for generating the seventh information is met, generates the seventh information, and sends the seventh information to the UPF network element.

There may be a plurality of manners in which the access network device sends the seventh information to the UPF network element. For example, the access network device may send a first data packet to the UPF network element, where the seventh information is carried in a GTP-U header of the first data packet, and the first data packet may be a data packet of the first service. The first data packet may be a data packet generated by the access network device (where for example, the access network device generates a dummy packet (namely, a dummy packet), and encapsulates the dummy packet according to a GTP-U protocol, to obtain the first data packet). In this case, a payload of the first data packet may be empty. Alternatively, the access network device receives a second data packet (where the second data packet may be a data packet of the first service) from the terminal device, and encapsulates the second data packet according to a GTP-U protocol, to obtain the first data packet. In this case, a payload of the first data packet includes the second data packet. In other words, after receiving the uplink data packet that is of the first service and that is sent by the terminal device, the access network device may send the seventh information by using the uplink data packet. Alternatively, the access network device may directly send the seventh information (where for example, the dummy packet is encapsulated according to the GTP-U protocol, to obtain the first data packet) without considering whether the uplink data packet of the first service is currently received, to more quickly notify a sender to adjust the sending rate.

It should be noted that there may be a plurality of specific implementations in which the seventh information is carried in the GTP-U header of the first data packet. For example, the seventh information may be carried in one field of the GTP-U header. The following describes two possible implementations with reference to Table 7 and Table 8. The implementation shown in Table 7 corresponds to the foregoing manner 1, and the implementation shown in Table 8 corresponds to the foregoing manner 2.

Table 7 shows one field of the GTP-U header. The field includes the identifier of the first QoS flow. Further, three domains: a domain f1, a domain f2, and a domain f3 may be added to the field. The domain f1 is used to carry the congestion indication, where the congestion indication indicates whether there is the transmission direction information and the marking for congestion. The domain f1 may include one bit. When a value of the bit is 1, it indicates that there is the transmission direction information and the marking for congestion. When a value of the bit is 0, it indicates that there is no transmission direction information and marking for congestion. The domain f2 is used to carry the transmission direction information. The domain f3 is used to carry the marking for congestion.

**Table 7: Example 1 of the seventh information carried in the GTP-U header**

| Bit | | | | | | | |
|---|---|---|---|---|---|---|---|
| 7 | 6 | 5 | 4 | 3 | 2 | 1 | 0 |
| PDU type (=1) | | | | QMP | Downlink delay indication | Uplink delay indication | **Domain f1** |
| Spare | Identifier of the first QoS flow | | | | | | |
| Spare | | | | | | | |
| Downlink sending time stamp repeated DL Sending Time Stamp Repeated | | | | | | | |
| Downlink received time stamp DL Received Time Stamp | | | | | | | |
| Uplink sending time stamp UL Sending Time Stamp | | | | | | | |
| Downlink delay result DL Delay Result | | | | | | | |
| Uplink delay result UL Delay Result | | | | | | | |
| **Domain f2** | | | | | | | |
| **Domain f3** | | | | | | | |
| Padding | | | | | | | |

Table 8 shows one field of the GTP-U header. The field includes the identifier of the first QoS flow. Further, four domains: a domain g1, a domain g2, a domain g3, and a domain g4 may be added to the field. The domain g1 is used to carry an uplink congestion indication, where the uplink congestion indication indicates whether there is the marking for uplink congestion. The domain g1 may include one bit. When a value of the bit is 1, it indicates that there is the marking for uplink congestion. When a value of the bit is 0, it indicates that there is no marking for uplink congestion. The domain g2 is used to carry a downlink congestion indication, where the downlink congestion indication indicates whether there is the marking for downlink congestion. The domain g3 is used to carry the marking for uplink congestion. The domain g4 is used to carry the marking for downlink congestion.

**Table 8: Example 2 of the seventh information carried in the GTP-U header**

| Bit | | | | | | | |
|---|---|---|---|---|---|---|---|
| 7 | 6 | 5 | 4 | 3 | 2 | 1 | 0 |
| PDU type (=1) | | | | QMP | Downlink delay indication | Uplink delay indication | **Domain g1** |
| Spare | **Domain g2** | Identifier of the first QoS flow | | | | | |
| Spare | | | | | | | |
| Downlink sending time stamp repeated DL Sending Time Stamp Repeated | | | | | | | |
| Downlink received time stamp DL Received Time Stamp | | | | | | | |
| Uplink sending time stamp UL Sending Time Stamp | | | | | | | |
| Downlink delay result DL Delay Result | | | | | | | |
| Uplink delay result UL Delay Result | | | | | | | |
| **Domain g3** | | | | | | | |
| **Domain g4** | | | | | | | |
| Padding | | | | | | | |

In addition, in another possible embodiment, for the uplink transmission, if the access network device determines that the trigger condition (where for example, it is determined that the uplink data packet of the first service is congested) for generating the seventh information is met, and receives the uplink data packet of the first service, where an ECN=01 or an ECN=10 is in the uplink data packet, the access network device may generate the seventh information, and send the seventh information to the UPF network element. In other words, for the uplink transmission, after determining that congestion occurs, the access network device may directly send the seventh information to the UPF network element, to request to reduce the sending rate of the uplink data packet of the first service without considering whether the uplink data packet with the ECN=01 or the ECN=10 is received. Alternatively, after determining that congestion occurs, the access network device may send the seventh information to the UPF network element after receiving the uplink data packet with the ECN=01 or the ECN=10 (where the ECN of the uplink data packet does not need to be modified), to request to reduce the sending rate of the uplink data packet of the first service.

For the downlink transmission, if the access network device determines that the trigger condition (where for example, it is determined that the downlink data packet of the first service is congested) for generating the seventh information is met, and receives the downlink data packet of the first service, where an ECN=01 or an ECN=10 is in the downlink data packet, the access network device may generate the seventh information, and send the seventh information to the UPF network element, to request to reduce the sending rate of the downlink data packet of the first service. In other words, for the downlink transmission, after determining that congestion occurs, the access network device may directly send the seventh information to the UPF network element, to request to reduce the sending rate of the downlink data packet of the first service without considering whether the downlink data packet with the ECN=01 or the ECN=10 is received. Alternatively, after determining that congestion occurs, the access network device may send the seventh information to the UPF network element after receiving the downlink data packet with the ECN=01 or the ECN=10 (where the ECN of the downlink data packet does not need to be modified), to request to adjust the sending rate of the downlink data packet of the first service.

Further, after the UPF network element receives the seventh information, if the seventh information indicates that the uplink data packet of the first service is congested, S703a and S704a are performed; or if the seventh information indicates that the downlink data packet of the first service is congested, S703b and S704b are performed.

S703a: The UPF network element sends a third data packet to the application server, where an ECN=11 is in an IP header of the third data packet.

Herein, the UPF network element may modify, to the ECN=11 based on the seventh information, an ECN field of the uplink data packet (where the ECN field in an IP header of the uplink data packet is the ECN=01 or the ECN=10) that is of the first service and that is received from the access network device, and send the uplink data packet to the application server. In an example, the uplink data packet may be the first data packet (where in this case, the first data packet may be obtained by encapsulating the second data packet by the access network device according to the GTP-U protocol), or the uplink data packet is another data packet different from the first data packet.

S704a: The application server notifies the terminal device to reduce the sending rate of the uplink data packet of the first service.

Herein, after receiving the third data packet, the application server may send an ACK packet to the terminal device, where an ECE=1 is in a TCP header of the ACK packet. Correspondingly, after receiving the ACK packet, the terminal device may reduce the sending rate of the uplink data packet of the first service based on the ACK packet.

S703b: The UPF network element sends a fourth data packet to the terminal device through the access network device, where an ECN=11 is in an IP header of the fourth data packet.

Herein, the UPF network element may modify, to the ECN=11 based on the seventh information, an ECN field of the downlink data packet (where the ECN field in an IP header of the downlink data packet is the ECN=01 or the ECN=10) that is of the first service and that is received from the application server, and send the downlink data packet to the access network device, and then the access network device sends the downlink data packet to the terminal device.

It should be noted that, in another possible embodiment, for a case in which congestion occurs during downlink transmission, in S702, after receiving the downlink data packet (for example, a data packet 1) of the first service from the UPF network element, the access network device may process the data packet 1 to obtain a data packet 2, and send the data packet 2 to the UPF network element, where a GTP-U header of the data packet 2 includes the seventh information. Correspondingly, after receiving the data packet 2, the UPF network element may process (for example, modify an ECN field in an IP header of the data packet 2 to an ECN=11 based on the seventh information) the data packet 2 to obtain the fourth data packet, and send the fourth data packet to the terminal device through the access network device.

S704b: The terminal device notifies the application server to reduce the sending rate of the downlink data packet of the first service.

Herein, after receiving the fourth data packet, the terminal device may send an ACK packet to the application server, where an ECE=1 is in a TCP header of the ACK packet. Correspondingly, after receiving the ACK packet, the application server may reduce the sending rate of the downlink data packet of the first service based on the ACK packet.

In the method in Embodiment 4, for the uplink transmission, the access network device may send the seventh information to the UPF network element, and then the UPF network element modifies the ECN field in the IP header of the downlink data packet to the ECN=11, and sends the downlink data packet to the terminal device. For the downlink transmission, the access network device may send the seventh information to the UPF network element, and then the UPF network element modifies the ECN field in the IP header of the uplink data packet to the ECN=11, and sends the uplink data packet to the application server. In this way, the access network device does not need to modify the ECN in the IP header of the uplink/downlink data packet while the congestion can be relieved, thereby improving data packet transmission security.

In Embodiment 4, the access network device is described as a whole. It can be learned from the foregoing descriptions of the access network device that the access network device may alternatively include split nodes, for example, as shown in FIG. 2b and FIG. 2c.

With reference to Embodiment 5, the following describes, based on the access network devices shown in FIG. 2b and FIG. 2c, interaction between different nodes included in the access network devices.

### Embodiment 5

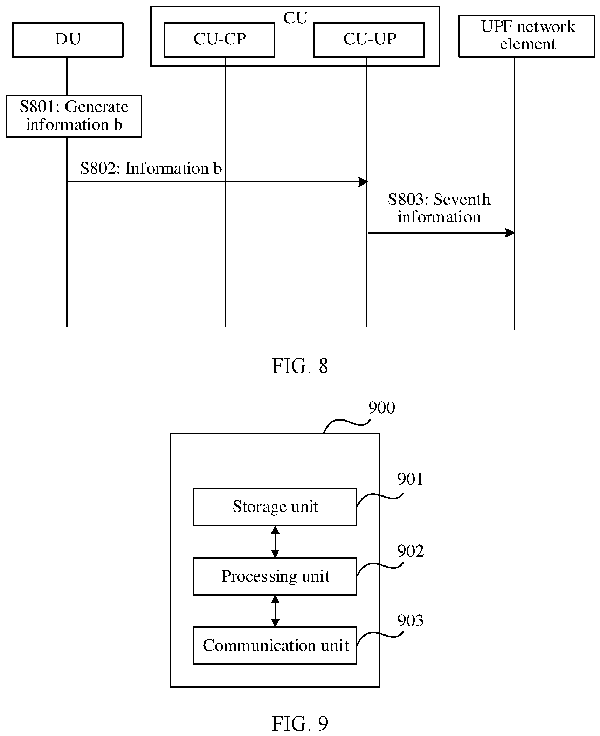

FIG. 8 is a schematic flowchart corresponding to a communication method according to Embodiment 5 of this application. As shown in FIG. 8, the method includes the following steps.

S801: A DU generates information b, where the information b indicates that an uplink/downlink data packet of a first service is congested.

Herein, in an example, the information b may include transmission direction information and marking for congestion. For details about the transmission direction information and the marking for congestion, refer to Embodiment 4. In another example, the information b may include marking for uplink congestion or marking for downlink congestion.

In a possible implementation, before S801, an SMF network element may send enabling information to a CU (or a CU-CP). Correspondingly, after receiving the enabling information, the CU (or the CU-CP) may send the enabling information to the DU. The enabling information is used to enable the DU to indicate that the uplink/downlink data packet of the first service is congested, or the enabling information is used to enable the DU to request to reduce a sending rate of the uplink/downlink data packet of the first service. For example, the CU (or the CU-CP) may send the enabling information to the DU by using a user context setup request message. For descriptions of the enabling information, refer to Embodiment 4.

S802: The DU sends the information b to the CU (or a CU-UP) through a first tunnel, where the first tunnel corresponds to a first DRB, the first DRB corresponds to a first QoS flow, and the first QoS flow is used to transmit a data packet of the first service.

For example, the DU may send an assistance information data frame to the CU (or the CU-UP), where the information b may be carried in a GTP-U header of the assistance information data frame. For example, the information b may be carried in one field of the GTP-U header. The following describes two possible implementations with reference to Table 9 and Table 10.

Table 9 shows one field of the GTP-U header, and three domains: a domain h1, a domain h2, and a domain h3 may be added to the field. The domain h1 indicates whether there is the information b. The domain h1 may include one bit. When a value of the bit is 1, it indicates that there is the information b. When a value of the bit is 0, it indicates that there is no information b. The domain h2 is used to carry the transmission direction information. The information h3 is used to carry the marking for congestion.

**Table 9: Example 1 of the information b carried in the GTP-U header**

| Bit | | | | | | | | |
|---|---|---|---|---|---|---|---|---|
| 7 | 6 | | 5 | 4 | 3 | 2 | 1 | 0 |
| PDU type (=2) | | | | | PDCP duplication indication | PDCP duplication indication | Downlink delay indication | Uplink delay indication |
| **Domain h1** | | Reserved | | | | | | PDCP duplication activation suggestion |
| Number of assistance information fields Number of Assistance Information Fields | | | | | | | | |
| Assistance information type Assistance Information Type | | | | | | | | |
| Number of octets for radio quality assistance information fields Number of octets for Radio Quality Assistance Information Fields | | | | | | | | |
| Radio quality assistance information Radio Quality Assistance Information | | | | | | | | |
| Downlink delay result UL Delay DU Result | | | | | | | | |
| Uplink delay result DL Delay DU Result | | | | | | | | |
| **Domain h2** | | | | | | | | |
| **Domain h3** | | | | | | | | |

Table 10 shows one field of the GTP-U header, and four domains: a domain i 1, a domain i2, a domain i3, and a domain i4 may be added to the field. The domain i 1 indicates whether there is the marking for uplink congestion. The domain i2 indicates whether there is the marking for downlink congestion. The domain i3 is used to carry the marking for uplink congestion. The domain i4 is used to carry the marking for downlink congestion.

**Table 10: Example 2 of the information b carried in the GTP-U header**

| Bit | | | | | | | |
|---|---|---|---|---|---|---|---|
| 7 | 6 | 5 | 4 | 3 | 2 | 1 | 0 |
| PDU type (=2) | | | | PDCP duplication indication | PDCP duplication indication | Downlink delay indication | Uplink delay indication |
| Reserved | | | | | **Domain i2** | **Domain i1** | PDCP duplication activation suggestion |
| Number of assistance information fields Number of Assistance Information Fields | | | | | | | |
| Assistance information type Assistance Information Type | | | | | | | |
| Number of octets for radio quality assistance information fields Number of octets for Radio Quality Assistance Information Fields | | | | | | | |
| Radio quality assistance information Radio Quality Assistance Information | | | | | | | |
| Downlink delay result UL Delay DU Result | | | | | | | |
| Uplink delay result DL Delay DU Result | | | | | | | |
| **Domain i3** | | | | | | | |
| **Domain i4** | | | | | | | |

S803: The CU (or the CU-UP) receives the information b from the DU through the first tunnel, and sends seventh information to a UPF network element. For descriptions of the seventh information, refer to Embodiment 4.

For a procedure after the UPF network element receives the seventh information, refer to Embodiment 4. Details are not described again.

For Embodiment 1 to Embodiment 5, the following needs to be noted.
(1) Step numbers of the flowcharts described in Embodiment 1 to Embodiment 5 are merely examples of performing the procedure, and do not constitute a limitation on a sequence of performing the steps. In embodiments of this application, there is no strict execution sequence among steps that do not have a time sequence dependency relationship with each other. In addition, not all steps shown in the flowcharts are necessarily performed steps, and some steps may be added or deleted based on the flowcharts according to an actual requirement.
(2) The solution 1 and the solution 2 provided in embodiments of this application may be separately implemented, or may be implemented in combination with a TCP congestion control mechanism. For example, if the solution 1 is implemented in combination with the TCP congestion control mechanism, and the downlink transmission is used as an example, the server may adjust the sending rate based on the sending rate recommended by the access network device and a congestion degree fed back by the TCP congestion control mechanism.

The foregoing mainly describes the solutions provided in embodiments of this application from a perspective of device interaction. It may be understood that, to implement the foregoing functions, an access network may include a corresponding hardware structure and/or a software module for performing each function. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on a particular application and a design constraint condition of the technical solutions. A person skilled in the art may use different methods to implement the described functions for each particular application, but it should not be considered that the implementation goes beyond the scope of this application.

In embodiments of this application, division into functional units may be performed on the access network device based on the foregoing method examples. For example, division into each functional unit may be based on each corresponding function, or two or more functions may be integrated into one unit. The foregoing integrated unit may be implemented in a form of hardware, or may be implemented in a form of a software functional unit.

When the integrated unit is used, FIG. 9 is a block diagram of a possible example of an apparatus according to an embodiment of this application. As shown in FIG. 9, the apparatus 900 may include a processing unit 902 and a communication unit 903. The processing unit 902 is configured to control and manage an action of the apparatus 900. The communication unit 903 is configured to support communication between the apparatus 900 and another device. Optionally, the communication unit 903 is also referred to as a transceiver unit, and may include a receiving unit and/or a sending unit, respectively configured to perform a receiving operation and a sending operation. The apparatus 900 may further include a storage unit 901, configured to store program code and/or data of the apparatus 900.

The apparatus 900 may be the access network device in the foregoing embodiments, or may be a chip disposed in the access network device. The processing unit 902 may support the apparatus 900 in performing the actions of the access network device in the foregoing method examples (for example, FIG. 4, FIG. 6, or FIG. 7). Alternatively, the processing unit 902 mainly performs an internal action of the access network device in the method examples (for example, FIG. 4, FIG. 6, or FIG. 7), and the communication unit 903 may support communication between the apparatus 900 and another device.

For example, in an embodiment, the processing unit 902 is configured to generate first information, where the first information includes an identifier of a first QoS flow and an uplink transmission indication, the first QoS flow is used to transmit a data packet of a first service, and the first information is used to request to adjust a sending rate of an uplink data packet of the first service. The communication unit 903 is configured to send the first information to a first core network element.

In another embodiment, the processing unit 902 is configured to generate an access stratum control message, where the access stratum control message indicates that a downlink data packet of a first service is congested. The communication unit 903 is configured to send the access stratum control message to a terminal device.

The apparatus 900 may be the terminal device in the foregoing embodiments, or may be a chip disposed in the terminal device. The processing unit 902 may support the apparatus 900 in performing the actions of the terminal device in the foregoing method examples (for example, FIG. 4, FIG. 6, or FIG. 7). Alternatively, the processing unit 902 mainly performs an internal action of the terminal device in the method examples (for example, FIG. 4, FIG. 6, or FIG. 7), and the communication unit 903 may support communication between the apparatus 900 and another device.

For example, in an embodiment, the communication unit 903 is configured to: receive an access stratum control message from an access network device, where the access stratum control message indicates that a data packet of a first service is congested; and notify an application server of the congestion based on the access stratum control message.

It should be understood that division into the units in the apparatus is merely logical function division. During actual implementation, all or some of the units may be integrated into one physical entity or may be physically separated. In addition, all of the units in the apparatus may be implemented in a form of software invoked by a processing element, or may be implemented in a form of hardware; or some of the units may be implemented in a form of software invoked by a processing element, and some of the units may be implemented in a form of hardware. For example, each unit may be a separately disposed processing element, or may be integrated into a chip of the apparatus for implementation. In addition, each unit may be stored in a memory in a form of a program, and invoked by a processing element of the apparatus to perform a function of the unit. In addition, all or some of the units may be integrated together, or may be independently implemented. The processing element described herein may also be referred to as a processor, and may be an integrated circuit that has a signal processing capability. In an implementation process, the operations in the foregoing methods or the foregoing units may be implemented by using a hardware integrated logic circuit in the processing element or may be implemented in the form of software invoked by the processing element.

In an example, a unit in any one of the foregoing apparatuses may be one or more integrated circuits configured to implement the foregoing methods, for example, one or more application-specific integrated circuits (application-specific integrated circuits, ASICs), one or more microprocessors (digital signal processor, DSP), one or more field programmable gate arrays (field programmable gate arrays, FPGAs), or a combination of at least two of these forms of integrated circuits. For another example, when the units in the apparatus may be implemented in a form of a program scheduled by the processing element, the processing element may be a processor, for example, a general-purpose central processing unit (central processing unit, CPU) or another processor that can invoke the program. For another example, the units may be integrated together and implemented in a form of a system-on-a-chip (system-on-a-chip, SOC).

The foregoing unit configured for receiving is an interface circuit of the apparatus, and is configured to receive a signal from another apparatus. For example, when the apparatus is implemented by using a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented by using the chip, the sending unit is an interface circuit that is of the chip and that is configured to send a signal to another chip or apparatus.

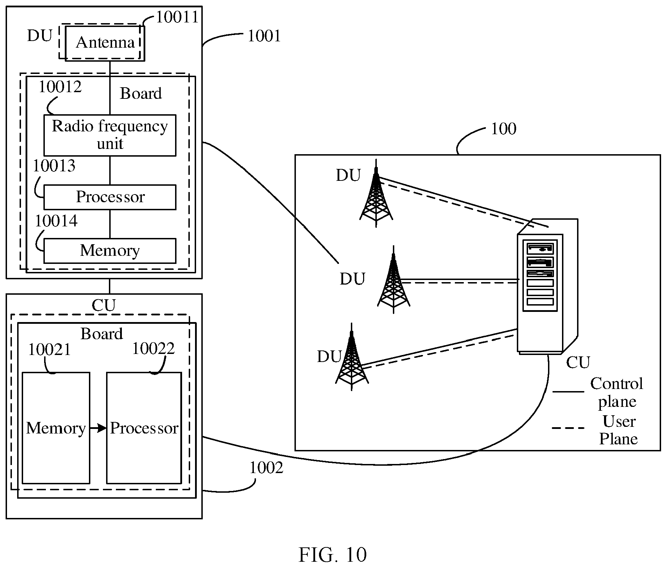

FIG. 10 is a schematic diagram of a structure of an access network device according to an embodiment of this application. The access network device (or a base station) may be used in the system architecture shown in FIG. 1, to perform functions of the access network device in the foregoing method embodiments. The access network device 100 may include one or more DUs 1001 and one or more CUs 1002. The DU 1001 may include at least one antenna 10011, at least one radio frequency unit 10012, at least one processor 10013, and at least one memory 10014. The DU 1001 part is mainly configured to: receive and send a radio frequency signal, perform conversion between a radio frequency signal and a baseband signal, and perform partial baseband processing. The CU 1002 may include at least one processor 10022 and at least one memory 10021.

The CU 1002 part is mainly configured to: perform baseband processing, control the access network device, and the like. The DU 1001 and the CU 1002 may be physically disposed together, or may be physically disposed separately, that is, may be a distributed base station. The CU 1002 is a control center of the access network device, may also be referred to as a processing unit, and is mainly configured to complete a baseband processing function. For example, the CU 1002 may be configured to control the access network device to perform operation procedures related to the access network device in the foregoing method embodiments.

In addition, optionally, the access network device 100 may include one or more radio frequency units, one or more DUs, and one or more CUs. The DU may include at least one processor 10013 and at least one memory 10014, the radio frequency unit may include at least one antenna 10011 and at least one radio frequency unit 10012, and the CU may include at least one processor 10022 and at least one memory 10021.

In an example, the CU 1002 may include one or more boards. A plurality of boards may jointly support a radio access network (for example, a 5G network) with a single access indication, or may separately support radio access networks (for example, an LTE network, a 5G network, or another network) with different access standards. The memory 10021 and the processor 10022 may serve one or more boards. In other words, the memory and the processor may be separately disposed on each board. Alternatively, a plurality of boards may share a same memory and a same processor. In addition, a necessary circuit may be further disposed on each board. The DU 1001 may include one or more boards. A plurality of boards may jointly support a radio access network (for example, a 5G network) with a single access indication, or may separately support radio access networks (for example, an LTE network, a 5G network, or another network) with different access standards. The memory 10014 and the processor 10013 may serve one or more boards. In other words, the memory and the processor may be separately disposed on each board. Alternatively, a plurality of boards may share a same memory and a same processor. In addition, a necessary circuit may be further disposed on each board.

The access network device shown in FIG. 10 may implement processes related to the access network device in the method embodiments shown in FIG. 4, FIG. 5, FIG. 6, FIG. 7, and FIG. 8. Operations and/or functions of the modules in the access network device shown in FIG. 10 are respectively used to implement corresponding procedures in the foregoing method embodiments. For details, refer to the descriptions in the foregoing method embodiments. To avoid repetition, detailed descriptions are properly omitted herein.

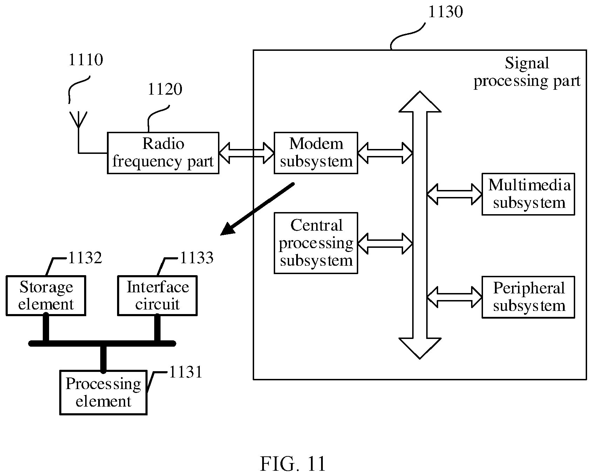

FIG. 11 is a schematic diagram of a structure of a terminal device according to an embodiment of this application. The terminal device is configured to implement operations of the terminal device in the foregoing embodiments. As shown in FIG. 11, the terminal device includes an antenna 1110, a radio frequency part 1120, and a signal processing part 1130. The antenna 1110 is connected to the radio frequency part 1120. In a downlink direction, the radio frequency part 1120 receives, through the antenna 1110, information sent by a network device, and sends the information sent by the network device to the signal processing part 1130 for processing. In an uplink direction, the signal processing part 1130 processes information of the terminal device, and sends the information to the radio frequency part 1120. After processing the information of the terminal device, the radio frequency part 1120 sends the information to the network device through the antenna 1110.

The signal processing part 1130 may include a modem subsystem, configured to implement processing on each communication protocol layer of data, may further include a central processing subsystem, configured to implement processing on an operating system and an application layer of the terminal device, and in addition, may further include another subsystem, for example, a multimedia subsystem and a peripheral subsystem, where the multimedia subsystem is configured to control a camera of the terminal device, a screen display, and the like, and the peripheral subsystem is configured to implement connection to another device. The modem subsystem may be a separately disposed chip.

The modem subsystem may include one or more processing elements 1131, for example, include a main control CPU and another integrated circuit. In addition, the modem subsystem may further include a storage element 1132 and an interface circuit 1133. The storage element 1132 is configured to store data and a program. However, a program used to perform the method performed by the terminal device in the foregoing methods may not be stored in the storage element 1132, but is stored in a memory outside the modem subsystem, and is loaded by the modem subsystem for use. The interface circuit 1133 is configured to communicate with another subsystem.

The modem subsystem may be implemented by using a chip. The chip includes at least one processing element and an interface circuit. The processing element is configured to perform the steps of any method performed by the terminal device. The interface circuit is configured to communicate with another apparatus. In an implementation, units of the terminal device for implementing the steps in the foregoing methods may be implemented in a form of a program scheduled by a processing element. For example, an apparatus used for the terminal device includes a processing element and a storage element. The processing element invokes a program stored in the storage element, to perform the method performed by the terminal device in the foregoing method embodiments. The storage element may be a storage element located on a same chip as the processing element, that is, an on-chip storage element.

In another implementation, a program used to perform the method performed by the terminal device in the foregoing methods may be in a storage element located on a different chip from the processing element, that is, an off-chip storage element. In this case, the processing element invokes or loads the program from the off-chip storage element to the on-chip storage element, to invoke and perform the method performed by the terminal device in the foregoing method embodiments.

In still another implementation, units of the terminal device for implementing the steps in the foregoing methods may be configured as one or more processing elements. These processing elements are disposed in the modem subsystem. The processing element herein may be an integrated circuit, for example, one or more ASICs, one or more DSPs, one or more FPGAs, or a combination of the types of integrated circuits. These integrated circuits may be integrated together to form a chip.

The units of the terminal device for implementing the steps in the foregoing methods may be integrated together, and implemented in a form of an SOC. The SOC chip is configured to implement the foregoing methods. At least one processing element and a storage element may be integrated into the chip, and the processing element invokes a program stored in the storage element to implement the foregoing method performed by the terminal device. Alternatively, at least one integrated circuit may be integrated into the chip, to implement the foregoing method performed by the terminal device. Alternatively, with reference to the foregoing implementations, functions of some units may be implemented by a program invoked by a processing element, and functions of some units may be implemented by an integrated circuit.

It can be learned that the foregoing apparatus used for the terminal device may include at least one processing element and an interface circuit. The at least one processing element is configured to perform any one of the methods that are performed by the terminal device and that are provided in the foregoing method embodiments. The processing element may perform, in a first manner, that is, in a manner of invoking the program stored in the storage element, some or all steps performed by the terminal device; or may perform, in a second manner, that is, in a manner of combining a hardware integrated logic circuit in the processing element with instructions, some or all steps performed by the terminal device; or may certainly perform, with reference to the first manner and the second manner, some or all steps performed by the terminal device.

The processing element herein is the same as that described above, and may be implemented by using a processor. A function of the processing element may be the same as a function of the processing unit described in FIG. 9. For example, the processing element may be a general-purpose processor, for example, a CPU, or may be one or more integrated circuits configured to implement the foregoing methods, for example, one or more ASICs, one or more microprocessors DSPs, one or more FPGAs, or a combination of at least two of these forms of integrated circuits. The storage element may be implemented by using a memory. A function of the storage element may be the same as a function of the storage unit described in FIG. 9. The storage element may be a memory, or may be a general name of a plurality of memories.

The terminal device shown in FIG. 11 can implement processes related to the terminal device in the foregoing method embodiments. Operations and/or functions of the modules in the terminal device shown in FIG. 11 are respectively used to implement corresponding procedures in the foregoing method embodiments. For details, refer to the descriptions in the foregoing method embodiments. To avoid repetition, detailed descriptions are properly omitted herein.

The terms "system" and "network" may be used interchangeably in embodiments of this application. "At least one" means one or more, and "a plurality of" means two or more. The term "and/or" describes an association relationship between associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, A and B, A and C, B and C, or A, B, and C. In addition, unless otherwise specified, ordinal numbers such as "first" and "second" in embodiments of this application are used to distinguish between a plurality of objects, and are not used to limit sequences, time sequences, priorities, or importance of the plurality of objects.

A person skilled in the art should understand that embodiment of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of procedures and/or blocks in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can instruct the computer or the another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto the computer or the another programmable data processing device, so that a series of operations and steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and scope of this application. Therefore, this application is intended to cover these modifications and variations of this application if they fall within the scope of the claims of this application and equivalent technologies thereof.

## Claims

1. A communication method, wherein the method is applicable to an access network device or a chip in the access network device, and the method comprises:
generating first information, wherein the first information comprises an identifier of a first quality of service QoS flow and an uplink transmission indication, the first QoS flow is used to transmit a data packet of a first service, and the first information is used to request to adjust a sending rate of an uplink data packet of the first service; and
sending the first information to a first core network element.

2. The method according to claim 1, wherein the first information further comprises second information, and the second information indicates a sending rate recommended by the access network device.

3. The method according to claim 2, wherein the second information comprises at least one of the following:
the sending rate recommended by the access network device;
an index value of the sending rate recommended by the access network device;
a frame rate that is of the first service and that is recommended by the access network device;
a maximum data burst volume that is of the first service and that is recommended by the access network device; and
an image resolution that is of the first service and that is recommended by the access network device.

4. The method according to any one of claims 1 to 3, wherein the method further comprises:
determining that the uplink data packet of the first service is congested; or
determining that a transmission delay that is of the uplink data packet of the first service and that is between the access network device and a terminal device is greater than or equal to a preset transmission delay.

5. The method according to any one of claims 1 to 4, wherein the sending the first information to a first core network element comprises:
sending a first data packet to the first core network element, wherein the first information is carried in a general packet radio service transmission protocol-user plane GTP-U header of the first data packet.

6. The method according to claim 5, wherein the method further comprises:
receiving a second data packet from the terminal device; and
encapsulating the second data packet according to a GTP-U protocol to obtain the first data packet.

7. The method according to any one of claims 1 to 6, wherein the method further comprises:
receiving enabling information from a second core network element, wherein the enabling information is used to enable the access network device to request to adjust the sending rate of the uplink data packet of the first service.

8. The method according to claim 7, wherein the enabling information is carried in a protocol data unit PDU session resource establishment request message, and the PDU session resource establishment request message is used to request to establish the first QoS flow; or
the enabling information is carried in a PDU session resource modification request message, and the PDU session resource modification request message is used to request to modify the first QoS flow.

9. The method according to any one of claims 1 to 8, wherein the method further comprises:
receiving third information, wherein the third information indicates an adjusted sending rate of the uplink data packet of the first service.

10. A communication apparatus, wherein the apparatus comprises:
a processing unit, configured to generate first information, wherein the first information comprises an identifier of a first QoS flow and an uplink transmission indication, the first QoS flow is used to transmit a data packet of a first service, and the first information is used to request to adjust a sending rate of an uplink data packet of the first service; and
a communication unit, configured to send the first information to a first core network element.

11. The apparatus according to claim 10, wherein the first information further comprises second information, and the second information indicates a sending rate recommended by the apparatus.

12. The apparatus according to claim 11, wherein the second information comprises at least one of the following:
the sending rate recommended by the apparatus;
an index value of the sending rate recommended by the apparatus;
a frame rate that is of the first service and that is recommended by the apparatus;
a maximum data burst volume that is of the first service and that is recommended by the apparatus; and
an image resolution that is of the first service and that is recommended by the apparatus.

13. The apparatus according to any one of claims 10 to 12, wherein the processing unit is further configured to:
determine that the uplink data packet of the first service is congested; or
determine that a transmission delay that is of the uplink data packet of the first service and that is between the apparatus and a terminal device is greater than or equal to a preset transmission delay.

14. The apparatus according to any one of claims 10 to 13, wherein the communication unit is specifically configured to:
send a first data packet to the first core network element, wherein the first information is carried in a GTP-U header of the first data packet.

15. The apparatus according to claim 14, wherein the communication unit is further configured to receive a second data packet from the terminal device; and
the processing unit is further configured to encapsulate the second data packet according to a GTP-U protocol to obtain the first data packet.

16. The apparatus according to any one of claims 10 to 15, wherein the communication unit is further configured to:
receive enabling information from a second core network element, wherein the enabling information is used to enable the apparatus to request to adjust the sending rate of the uplink data packet of the first service.

17. The apparatus according to claim 16, wherein the enabling information is carried in a protocol data unit PDU session resource establishment request message, and the PDU session resource establishment request message is used to request to establish the first QoS flow; or
the enabling information is carried in a PDU session resource modification request message, and the PDU session resource modification request message is used to request to modify the first QoS flow.

18. The apparatus according to any one of claims 10 to 17, wherein the communication unit is further configured to:
receive third information, wherein the third information indicates an adjusted sending rate of the uplink data packet of the first service.

19. A communication apparatus, comprising a module configured to perform the method according to any one of claims 1 to 9.

20. A communication apparatus, comprising a processor and a memory, wherein the processor is coupled to the memory, and the processor is configured to implement the method according to any one of claims 1 to 9.

21. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 9 by using a logic circuit or by executing code instructions.

22. A computer-readable storage medium, wherein the storage medium stores a computer program or instructions, and when the computer program or the instructions are executed by a communication apparatus, the method according to any one of claims 1 to 9 is implemented.

23. A computer program product, wherein the computer program product comprises instructions, and when the instructions are run by a computer, the method according to any one of claims 1 to 9 is implemented.
